# EUROPEAN PATENT APPLICATION

(11) **EP 4 701 148 A1**
(43) Date of publication of application: **25.02.2026**
(21) Application number: 24759040.9
(22) Date of filing: 20.06.2024
(51) Int. Cl.: H04L 41/0803, H04L 41/16, H04L 41/14, H04L 41/147, H04L 41/22, H04L 41/0894, H04L 41/0895

(54) **NETWORK ACTIVATION METHOD AND APPARATUS FOR APPLICATION LAUNCH, AND DEVICE AND MEDIUM**

(71) Applicant: New H3C Technologies Co., Ltd., Hangzhou, Zhejiang 310052 (CN)
(72) Inventor: YAN, Feng, Beijing 100102 (CN)
(74) Representative: IPAZ
(86) International application number: PCT/CN2024/100396
(87) International publication number: WO 2025/260322

(57) **Abstract**

Examples of the present disclosure provide a network activation method and apparatus for application launch, a device, and a medium, which relate to the technology field of artificial intelligence. The method includes: based on a human-computer interaction mode, collecting a first natural language for indicating an application launch service intention; inputting the first natural language into an AI network large model to obtain a target network activation scheme; performing simulation and evaluation on the target network activation scheme; activating the network based on the target network activation scheme after a result of simulation and evaluation meets a preset condition. The technical schemes provided by the examples of the present disclosure can be applied to improve the ability to understand a user's service-level intention, improve the scalability of intention collecting, and improve the adaptability to scenarios and networking.

## Description

### TECHNICAL FIELD

The present disclosure relates to the technical field of artificial intelligence, and in particular to a network activation method and apparatus for application launch, a device and a medium.

### BACKGROUND

Application launch is a typical scenario in the network operation phase in the entire life cycle management service of the Data Center Network (DCN). The process of implementing the application launch function is actually a network activation process for application launch. At present, the network activation process for application launch is to determine a target network activation scheme from pre-configured network activation schemes based on network language input by the user for indicating an intention, and activate a network is according to the target network activation scheme, to realize application launch.

In this network activation method for application launch, the input intention is a highly professional network language, which is difficult for a user to understand and can be understand only by professional network administrators, making it less user-friendly. In addition, only unchangeable intention can be collected and understood. When a new intention and a change in intention appear, the device will not be able to understand the new intention and the change in intention, and the application cannot be launched. In addition, the device can only use the pre-configured network activation schemes to activate the network, but the pre-configured network activation scheme are limited and are unable to being self-adaptive to a new scenario or networking requirement.

### SUMMARY

The object of examples of the present disclosure is to provide a network activation method and apparatus for application launch, a device, and a medium, so as to improve the ability to understand the user's service-level intention, improve the scalability of intention collecting, and improve the adaptability to scenarios and networking. The specific technical solutions are as follows:
In a first aspect, an example of the present disclosure provides a network activation method for application launch, including:
based on a human-computer interaction mode, collecting a first natural language for indicating an application launch service intention;
inputting the first natural language into an artificial intelligence (AI) network large model to obtain a target network activation scheme;
performing simulation and evaluation on the target network activation scheme;
after a result of the simulation and evaluation meets a preset condition, activating a network based on the target network activation scheme.

In some examples, based on the human-computer interaction mode, collecting the first natural language for indicating the application launch service intention, includes:
presenting a human-computer interaction dialog box;
receiving the first natural language for indicating the application launch intention, which is input by a user on the human-computer interaction dialog box.

In some examples, the method further includes:
displaying first prompt information on the human-computer interaction dialog box, wherein the first prompt information is to guide an input of the application launch service intention.

In some examples, inputting the first natural language into the artificial intelligence AI network large model to obtain the target network activation scheme, includes:
matching the first natural language with pieces of knowledge of multiple pre-stored network activation schemes to obtain multiple pieces of candidate knowledge;
inputting the first natural language and the multiple pieces of candidate knowledge into the AI network large model to obtain the target network activation scheme.

In some examples, the method further includes:
based on the human-computer interaction mode, collecting a second natural language for indicating a presenting mode of the network activation scheme;
inputting the second natural language into the AI network large model to obtain a target presenting mode;
calling an interface corresponding to the target presenting mode by using an AI agent, to present the target network activation scheme.

In some examples, based on the human-computer interaction mode, collecting the second natural language for indicating the presenting mode of the network activation scheme, includes:
presenting a human-computer interaction dialog box;
receiving the second natural language for indicating the presenting mode of the network activation scheme, which is input by a user on the human-computer interaction dialog box.

In some examples, the method further includes:
displaying second prompt information on the human-computer interaction dialog box, wherein the second prompt information is to guide an input of the presenting mode of the network activation scheme.

In some examples, performing simulation and evaluation on the target network activation scheme, includes:
adjusting the presented target network activation scheme based on a user operation;
performing simulation and evaluation on the adjusted target network activation scheme.

In some examples, the AI network large model outputs multiple target network activation schemes;
performing simulation and evaluation on the target network activation scheme, includes:
determining one target network activation scheme from the multiple target network activation schemes;
performing simulation and evaluation on the determined target network activation scheme.

In some examples, determining one target network activation scheme from the multiple target network activation schemes, includes:
based on the human-computer interaction mode, collecting a third natural language for indicating the determined target network activation scheme;
inputting the third natural language into the AI network large model to obtain the determined target network activation scheme.

In some examples, based on the human-computer interaction mode, collecting the third natural language for indicating the determined target network activation scheme, includes:
presenting a human-computer interaction dialog box;
receiving the third natural language for indicating the determined target network activation scheme, which is input by a user on the human-computer interaction dialog box.

In some examples, the method further includes:
displaying third prompt information on the human-computer interaction dialog box, wherein the third prompt information is to guide an input of the determined target network activation scheme.

In some examples, performing simulation and evaluation on the target network activation scheme, includes:
based on the human-computer interaction mode, collecting a fourth natural language for indicating simulation and evaluation;
inputting the fourth natural language into the AI network large model to obtain a simulation and evaluation instruction;
calling an interface corresponding to the simulation and evaluation instruction by using an AI agent, to perform simulation and evaluation on the target network activation scheme.

In some examples, based on the human-computer interaction mode, collecting the fourth natural language for indicating simulation and evaluation, includes:
presenting a human-computer interaction dialog box;
inputting the fourth natural language for indicating simulation and evaluation, which is input by a user on the human-computer interaction dialog box.

In some examples, the method further includes:
displaying fourth prompt information on the human-computer interaction dialog box, wherein the fourth prompt information is to guide an input of execution information of simulation and evaluation.

In some examples, activating the network based on the target network activation scheme, includes:
based on the human-computer interaction mode, collecting a fifth natural language for indicating network activation;
inputting the fifth natural language into the AI network large model to obtain a network activation instruction;
calling an interface corresponding to the network activation instruction by using an AI agent, to activate the network by using the target network activation scheme.

In some examples, based on the human-computer interaction mode, collecting the fifth natural language for indicating network activation, includes:
presenting a human-computer interaction dialog box;
receiving the fifth natural language for indicating network activation, which is input by a user on the human-computer interaction dialog box.

In some examples, the method further includes:
displaying fifth prompt information on the human-computer interaction dialog box, wherein the fifth prompt information is to guide an input of execution information of network activation.

In some examples, the method further includes:
determining a to-be-executed operation;
displaying prompt information associated with the to-be-executed operation on the human-computer interaction dialog box.

In some examples, the method further includes:
obtaining a sample natural language and a sample network activation scheme corresponding to the sample natural language;
using the sample natural language and the sample network activation scheme to fine-tune the AI network large model.

In a second aspect, an example of the present disclosure provides a network activation apparatus for application launch, including:
a collecting module, to collect a first natural language for indicating an application launch service intention based on a human-computer interaction mode;
a determining module, to input the first natural language into an artificial intelligence AI network large model to obtain a target network activation scheme;
a simulating module, to perform simulation and evaluation on the target network activation scheme;
an activating module, to activate a network based on the target network activation scheme after a result of the simulation and evaluation meets a preset condition.

In some examples, the collecting module is specifically to:
present a human-computer interaction dialog box;
receive the first natural language for indicating the application launch intention, which is input by a user on the human-computer interaction dialog box.

In some examples, the collecting module is further to:
display first prompt information on the human-computer interaction dialog box, wherein the first prompt information is to guide an input of the application launch service intention.

In some examples, the determining module is specifically to:
match the first natural language with pieces of knowledge of multiple pre-stored network activation schemes to obtain multiple pieces of candidate knowledge;
input the first natural language and the multiple pieces of candidate knowledge into the AI network large model to obtain the target network activation scheme.

In some examples, the apparatus further includes a presenting module, to:
based on the human-computer interaction mode, collect a second natural language for indicating a presenting mode of the network activation scheme;
input the second natural language into the AI network large model to obtain a target presenting mode;
call an interface corresponding to the target presenting mode by using an AI agent, to present the target network activation scheme.

In some examples, the presenting module is specifically to:
present a human-computer interaction dialog box;
receive the second natural language for indicating the presenting mode of the network activation scheme, which is input by a user on the human-computer interaction dialog box.

In some examples, the presenting module is further to:
display second prompt information on the human-computer interaction dialog box, wherein the second prompt information is to guide an input of the presenting mode of the network activation scheme.

In some examples, the simulating module is specifically to:
adjust the presented target network activation scheme based on a user operation;
perform simulation and evaluation on the adjusted target network activation scheme.

In some examples, the AI network large model outputs multiple target network activation schemes;
the simulating module is specifically to:
determine one target network activation scheme from the multiple target network activation schemes;
perform simulation and evaluation on the determined target network activation scheme.

In some examples, the simulating module is specifically to:
based on the human-computer interaction mode, collect a third natural language for indicating the determined target network activation scheme;
input the third natural language into the AI network large model to obtain the determined target network activation scheme.

In some examples, the simulating module is specifically to:
present a human-computer interaction dialog box;
receive the third natural language for indicating the determined target network activation scheme, which is input by a user on the human-computer interaction dialog box.

In some examples, the simulating module is further to:
display third prompt information on the human-computer interaction dialog box, wherein the third prompt information is to guide an input of the determined target network activation scheme.

In some examples, the simulating module is specifically to:
based on the human-computer interaction mode, collect a fourth natural language for indicating simulation and evaluation;
input the fourth natural language into the AI network large model to obtain a simulation and evaluation instruction;
call an interface corresponding to the simulation and evaluation instruction by using an AI agent, to perform simulation and evaluation on the target network activation scheme.

In some examples, the simulating module is specifically to:
present a human-computer interaction dialog box;
input the fourth natural language for indicating simulation and evaluation, which is input by a user on the human-computer interaction dialog box.

In some examples, the simulating module is further to:
display fourth prompt information on the human-computer interaction dialog box, wherein the fourth prompt information is to guide an input of execution information of simulation and evaluation.

In some examples, the activating module is specifically to:
based on the human-computer interaction mode, collect a fifth natural language for indicating network activation;
input the fifth natural language into the AI network large model to obtain a network activation instruction;
call an interface corresponding to the network activation instruction by using an AI agent, to activate the network by using the target network activation scheme.

In some examples, the activating module is specifically to:
present a human-computer interaction dialog box;
receive the fifth natural language for indicating network activation, which is input by a user on the human-computer interaction dialog box.

In some examples, the activating module is further to:
display fifth prompt information on the human-computer interaction dialog box, wherein the fifth prompt information is to guide an input of execution information for network activation.

In some examples, the apparatus further includes a displaying module, to:
determine a to-be-executed operation;
display prompt information associated with the to-be-executed operation on the human-computer interaction dialog box.

In some examples, the apparatus further includes a fine-tuning module, to:
obtain a sample natural language and a sample network activation scheme corresponding to the sample natural language;
use the sample natural language and the sample network activation scheme, to fine-tune the AI network large model.

In a third aspect, an example of the present disclosure provides an electronic device, including a processor, a communication interface, a memory, and a communication bus, wherein the processor, the communication interface, and the memory communicate with each other through the communication bus;
the memory, to store a computer program;
the processor, to carry out any of the methods described in the first aspect when executing the program stored in the memory.

In a fourth aspect, an example of the present disclosure provides a computer-readable storage medium having a computer program stored therein, wherein the computer program, when executed by a processor, carries out any of the methods described in the first aspect.

In yet another example provided by the present disclosure, a computer program product containing instructions is further provided, which when run on a computer, cause the computer to carry out any of the methods described in the first aspect.

Beneficial effects of the examples of the present disclosure:
In the technical scheme provided by the example of the present disclosure, the natural language is used to express a user intention, that is, the application launch service intention. The natural language is a language that is easy for the user to understand without a professional knowledge background. Therefore, the natural language is used to express the user intention, to realize network activation for application launch, which improves the ability to understand the user's service-level intention. In addition, in the technical scheme provided by the example of the present disclosure, the AI network large model is used to analyze and process the natural language (i.e., the first natural language) for expressing the user intention, so as to obtain the target network activation scheme that meets the application launch service intention. Since the AI network large model has a strong capability to process the natural language, there is no need for pre-configured network activation schemes and intentions. That is, even if a new intention and a change in intention appear, or a change in the scenario and the networking requirement appears, the AI network large model can perform analysis to obtain the required target network activation scheme, thereby improving the scalability of intention collecting, and improving the adaptability to scenarios and networking.

### BRIEF DESCRIPTION OF THE DRAWINGS

The accompanying drawings described here are used to provide a further understanding of the present disclosure and constitute a part of the same. The illustrative examples of the present disclosure and their descriptions are used to explain the present disclosure and do not constitute an improper limitation of the present disclosure.
Figure 1 is a schematic diagram of a graded generation definition of a data center autonomous network;
Figure 2 is a schematic diagram of five common task phases of an information and communication network operation and management activity;
Figure 3 is a schematic diagram of an application launch processing flow;
Figure 4 is a schematic diagram of an interface in an intention collecting phase;
Figure 5 is a schematic diagram of an interface in a scheme recommending phase;
Figure 6 is a schematic diagram of an interface in a scheme generating phase;
Figure 7 is a schematic flow chart of a network activation method for application launch provided by an example of the present disclosure;
Figure 8 is a detailed schematic diagram of block S72 provided by an example of the present disclosure;
Figure 9 is a schematic diagram of a process for establishing a scheme knowledge base provided by an example of the present disclosure;
Figure 10 is a schematic flow chart of obtaining a target network activation scheme based on an AI network large model provided by an example of the present disclosure;
Figure 11 is a schematic diagram of a processing logic in an intention analysis phase provided by an example of the present disclosure;
Figure 12 is a schematic flow chart for presenting a network activation scheme provided by an example of the present disclosure;
Figure 13 is a schematic diagram of a graphical presentation using an AI agent framework provided by an example of the present disclosure;
Figure 14 is a first schematic flow chart of block S73 provided by an example of the present disclosure;
Figure 15 is a detailed schematic diagram of block S141 provided by an example of the present disclosure;
Figure 16 is a second schematic flow chart of block S73 provided by an example of the present disclosure;
Figure 17 is a schematic flow chart of block S74 provided by an example of the present disclosure;
Figure 18 is a schematic frame diagram of a network activation method for application launch provided by an example of the present disclosure;
Figures 19a to 19c are first schematic diagrams of an interface of an SDN controller provided by an example of the present disclosure;
Figures 20a to 20e are second schematic diagrams of an interface of an SDN controller provided by an example of the present disclosure;
Figure 21 is a third schematic diagram of an interface of an SDN controller interface provided by an example of the present disclosure;
Figures 22a to 22b are fourth schematic diagrams of an interface of an SDN controller interface provided by an example of the present disclosure;
Figure 23 is a schematic structure diagram of a network activation apparatus for application launch provided by an example of the present disclosure;
Figure 24 is a schematic structure diagram of an electronic device provided by an example of the present disclosure.

### DETAILED DESCRIPTION

In order to make the objective, technical solutions and advantages of the present disclosure clearer and more understandable, the present disclosure will be described in more detail below with reference to the accompanying drawings and examples. Obviously, the described examples are only some, and not all, of the examples of the present disclosure. All other examples obtained based on the examples of the present disclosure by those skilled in the art fall into the scope of protection of the present disclosure.

To facilitate understanding, terms appearing in examples of the present disclosure are explained below.

Autonomous network: it is intended to build automated and intelligent operation and maintenance capabilities for an entire life cycle of the network, provide a new network and an information and communication technology (ICT) service with "zero waiting, zero failure, and zero contact" for consumers and vertical industry customers, and create digital and intelligent operation and maintenance capabilities with "self-configuration, self-repair, and self-optimization" for network intelligent operation and maintenance.

AI network large model: a machine learning model with super-large-scale parameters (usually more than one billion) and super computing resources, which is capable of processing enormous data and completing various complex tasks, such as natural language processing and image recognition. The AI network large model can also be referred to as an artificial intelligence generated content (AIGC) network large model.

Data center application: a service application or application system deployed by a user in a DCN to complete specific functions, such as online shopping applications. For ease of description, the data center application is referred to as an application below.

Data center service: a functional unit that runs independently and achieves a specific service purpose within a data center application. One data center application consists of one or more data center services. For example, an online shopping application includes an inventory service, a sec-killing service, an authentication service, a logistics service, and a data base service. For ease of description, the data center service is referred to as a service.

Application launch: a data center application such as a website, application program or other products is officially launched to the public, so that the data center application is available and accessible to a user.

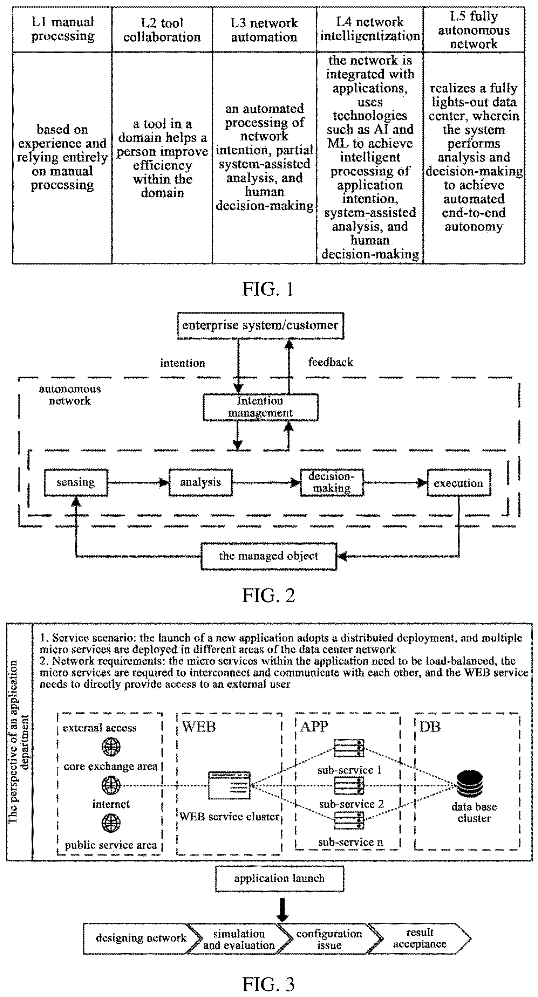

At present, the DCN is gradually developing into an autonomous network, and form a data center autonomous network. The data center autonomous network is referred to as a network below. An objective of the data center autonomous network is to gradually reduce manual operations on the network until the manual operations are eliminated. By defining graded capabilities to guide customers, it gradually evolves towards an unattended DCN autonomous vision. Figure 1 shows a graded generation definition of a data center autonomous network.

Level 1 (L1): manual processing: the data center autonomous network is based on experience and relies entirely on manual processing.

Level 2 (L2): tool collaboration: the data center autonomous network uses a tool in a domain to help a person improve efficiency within the domain.

Level 3 (L3): network automation: the data center autonomous network realizes an automated processing of network intention, partial system-assisted analysis, and human decision-making.

Level 4 (L4): network intelligentization: the data center autonomous network is integrated with applications, uses technologies such as AI and machine learning (ML) to achieve intelligent processing of application intention, system-assisted analysis, and human decision-making.

Level 5 (L5): fully autonomous network: the data center autonomous network realizes a fully lights-out data center, wherein the system performs analysis and decision-making to achieve automated end-to-end autonomy.

The objective of the data center autonomous network depends on the development of network automation and intelligent technologies. The level of the data center autonomous network can be divided in two dimensions.

Dimension 1: DCN entire life cycle management service, including planning and constructing, network operation, monitoring operation and maintenance, and optimizing operation.

Dimension 2: information and communication network operation and management activity, including intention management, sensing, analysis, decision-making, and execution.

The data center autonomous network needs to perform the information and communication network operation and management activity in each management service phase in its entire life cycle. Five common task phases of the information and communication network operation and management activity shown in Figure 2 are intention management, sensing, analysis, decision-making, and execution in the above dimension 2.

Intention management phase: understanding an intention of a customer service and managing the operation and maintenance, and translating the same into a specific network configuration and strategy. The intention management can support both low-level traditional functions, such as support any required orchestration for coordinating and configuring operations on the network, and higher-level abstract information understanding capabilities, such as support open modifiable capabilities, to facilitate customers to adjust the scheme based on actual networking. The intention management also includes full records of the service intention operation process, which can be traced and queried.

Sensing phase: the DCN is monitored and observed in real time, and multi-dimensional problems such as abnormal network services or service-level agreement (SLA) are found, then network analysis and positioning is triggered. Specifically, it includes collecting raw network data and performing necessary pre-processing on the data (such as cleaning, enhancement, statistics on the data, etc.), to achieve the purpose of monitoring and sensing network information (including network performance, network anomalies, network events, etc.) and achieving visualization of presentation.

Analysis phase: the current status of the DCN is analyzed, and a network analysis is made in combination with a customer intention based on historical data, to generate operational actions that can meet the customer intention and options and suggestions for strategy execution.

Decision-making phase: based on the options and suggestions provided in the analysis phase, a most suitable and executable network operation and strategy that meets the requirement for the customer intention is determined.

Execution phase: an executable network operation and strategy is generated based on the customer intention for which the decision has been made, and automatically implemented and deployed to a production network in the data center (i.e. DCN). It also includes service verification of the intention after the network is implemented.

In Figure 2, an enterprise system/customer inputs the intention, and the autonomous network performs an intention management on the input intention, understands the intention, and performs an sense, an analysis, a decision-making and an execution, performs operations on the managed object, and provides a feedback to the enterprise system/customer. The managed object of the DCN is various DCN applications, DCN devices and network endpoint devices.

As a typical scenario in the network operation phase in the DCN entire life cycle management service, application launch is a common service operation for an enterprise data center customer. The DCN carries many types of applications of the enterprise, and an application accessed by an external customer is required to run stably within the DCN. With the development and innovation of the service, when the enterprise customer needs to launch a new application, such as an online shopping application, from the perspective of an application department, the service scenario is that the launch of a new application adopts a distributed deployment to improve the reliability of the service, and multiple micro services are deployed in different areas of the DCN; the network requirements are that the micro services within the application need to be load-balanced, the micro services are required to interconnect and communicate with each other, and the World Wide Web (WEB) service needs to directly provide access capabilities to an external user. An network department (i.e., the application department) will analyze the overall architecture of the application, including a series of requirements such as internal functional services, service resources, communication relationship between the services, and security access isolation requirements, etc. Based on the requirements, the network department coordinates the allocation of network resources, accesses applications, and activates networks for communication between the application services, so as to ensure the normal operation of the application. The application launch is a complex process, including steps of designing network, simulation and evaluation, configuration issuing and result acceptance, and so on. An application launch processing flow is shown in Figure 3.

The application launch scenario includes an external access area, a WEB area, an application (APP) area and a data base (DB) area. The external access area includes a core exchange area, the Internet and a public service area; the WEB area includes a WEB service cluster; the APP area includes multiple sub-services (i.e., sub-service 1, sub-service 2,... sub-service n, etc.), and the sub-services are the above-mentioned micro services; the DB area includes a data base cluster. As shown in Figure 3, the multiple sub-services access the data base cluster and the WEB service cluster, and access the Internet through the WEB service cluster to achieve external access.

The process of implementing the application launch function is actually a network activation process for application launch. At present, the network activation process for application launch is to determine a target network activation scheme from pre-configured network activation schemes through an interface entrance solidified by a software defined network (SDN) controller based on network language input by the user for indicating an intention, and activate the network according to the target network activation scheme, to realize application launch. The network activation process for application launch consists of four phases: intention collecting, scheme recommending, scheme generating, and scheme issuing, as follows.

### 1) Intention collecting phase

The device (i.e., DCN device) collects network language indicating an intention input by the user for indicating an intention, wherein the network language is language for expressing a network architecture and being orchestrated according to an arrangement of service resources, such as what services are included in creating a security partition and creating an external network and a security partition, an interconnection relationship between services, and the number of instances created, etc. In this phase, an user can orchestrate the intention content by themselves himself or herself according to the resources such as a security partition, an external network, a service, and a mutual access relationship provided by the device in a resource block.

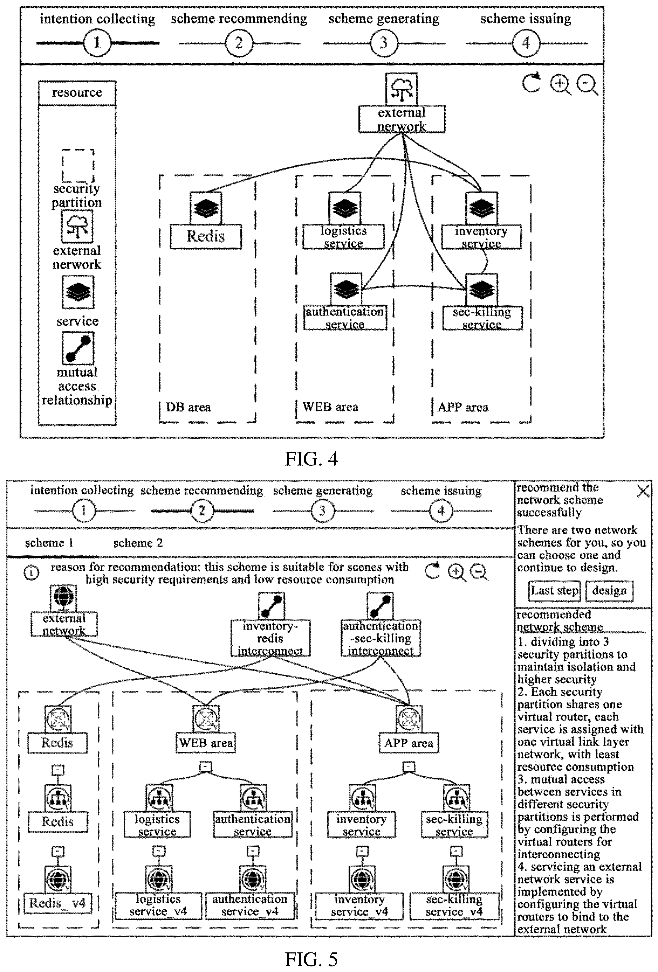

Taking a customer requiring for launch of an online shopping application as an example, the online shopping application includes an inventory service, a sec-killing service, an authentication service, a logistics service, and a data base service. An interface in the intention collecting phase shown in Figure 4 includes a phase column at the top, a resource column on the left, and a display column in the middle. The phase column includes four phases: intention collecting, scheme recommending, scheme generating, and scheme issuing. The current interface is in the intention collecting phase; the resource column includes four types of resources: a security partition, an external network, a service, and a mutual access relationship. A User can create three security partitions, namely a DB area, a WEB area, and an APP area, by himself or herself according to the plan, and create respective services in different partitions. Wherein, the APP area includes the inventory service and the sec-killing service, the WEB area includes the authentication service and the logistics service, and the DB area includes a remote dictionary server (Redis).

Furthermore, the user can orchestrate the mutual access relationship between services according to service needs, that is, the inventory service needs to access the Redis data base, and the inventory service, the sec-killing service, the authentication service and the logistics service need to access the external network, and the sec-killing service needs to access the inventory service and the authentication service. By building the gateway architecture in the above method, the intention content is input, that is, after the network language is input, the scheme recommending can be performed next.

### 2) Scheme recommending phase

The device performs deduction and analysis based on the intention content input by the user, and recommends one or more network activation schemes through a pre-built-in logic of the SDN controller. Different network activation schemes have different tendencies. For example, some network activation schemes give priority to resource consumption, while others give priority to security.

An interface in the scheme recommending phase is shown in Figure 5. The device recommends two network activation schemes (i.e., Scheme 1 and Scheme 2) to the user. A network activation scheme currently displayed on the interface in the scheme recommending phase is Scheme 1, and the displayed content includes Scheme 1 presented graphically, a recommending reason for Scheme 1, and a text introduction to Scheme 1 at the bottom right. The user can click on a "Scheme 2" button below the phase column, so that the device displays Scheme 2 in response to the user clicking on the "Scheme 2" button. After the user selects a network activation scheme (such as Scheme 1) according to the needs, the user clicks on the "Design" button at the top right, and then the device enters the scheme generating phase in response to the user clicking on the "Design" button.

### 3) Scheme generating phase

The device can perform verification of simulation and evaluation on the selected network activation scheme to ensure the reliability of the launch service. After the user enters this phase, a network administrator can design scheme details in detail in combination with the physical topology and the occupation of resources of the current network device (i.e., network end-point device). After the supplement is completed, the device simulates and evaluates the selected network activation scheme, to evaluate the feasibility of the currently selected network activation scheme, and to perform configuration for changes in the current network device and changes in resources.

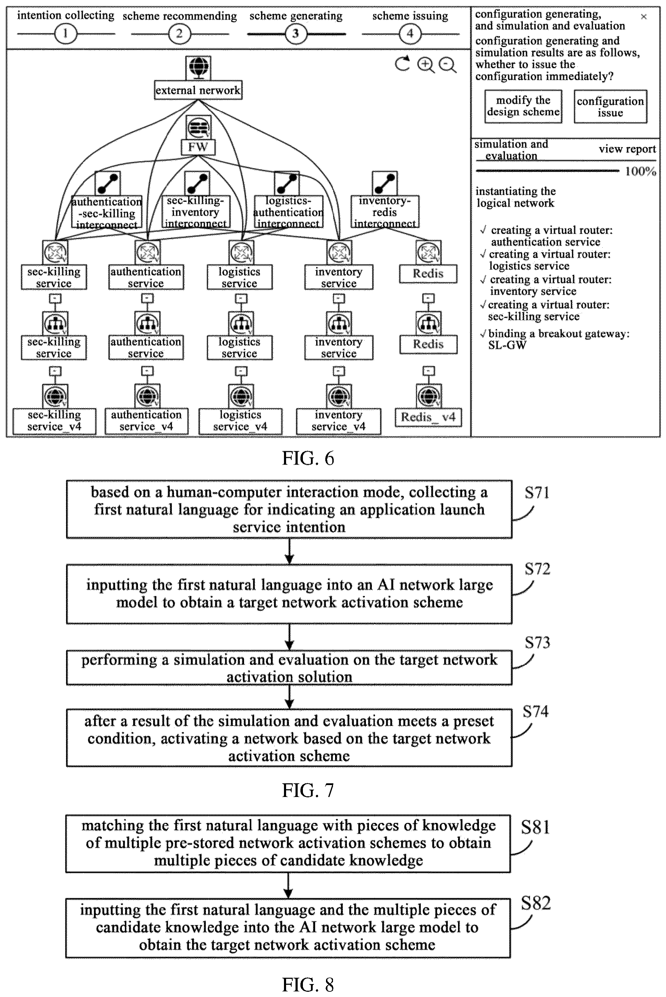

An interface in the scheme generating phase is shown in Figure 6. The interface in the scheme generating phase displays the topology of the network activation scheme after the configuration is generated, the simulation and evaluation process in the lower right corner, and the operations performed during the simulation and evaluation process. The topology also includes a firewall (FW) module. During the simulation and evaluation process, a virtual router for the authentication service is created, a virtual router for the logistics service is created, a virtual router for the inventory service is created, a virtual router for the sec-killing service is created, an breakout gateway (service level (SL)-GW) is bound, etc., to instantiate the logical network and evaluate the instantiated logical network. After the simulation and evaluation is completed (i.e., the simulation and evaluation process is 100%), the user can click on "View Report" to obtain an evaluation result for this time and determine the next operation based on the evaluation result. If the evaluation result indicates that the scheme can be issued, the user can click on a "Configuration Issue" button at the upper right, and then the device enters a scheme issuing phase in response to the user clicking on the "Configuration Issue" button. Alternatively, if the evaluation result indicates that the scheme cannot be issued, the user can return to the scheme recommending phase, adjust the recommended scheme, and then enter the scheme generating phase again.

### 4) Scheme issuing phase

During the scheme issuing phase, the network activation scheme will be converted into a network configuration and issued to the current network device in a production environment, and an issuing report will be output, so as to activate the network and launch the application.

In this network activation method for application launch, the input intention is a highly professional network language, such as a security partition, an external network, the number of services and instances, and the interconnection relationship between the services. This network language is difficult for a user to understand and can be understand only by professional network administrators. However, for the service-level intentions that the user really cares about, such as how many services does a certain application that the user needs to launch consist of, how much concurrent access does the application support at the same time, the application's requirements for network reliability, and whether security protection requirements are required for mutual access between the applications, the device has no ability to understand these intentions. In other words, the current network activation method for application launch is less user-friendly.

In addition, the current network activation method for application launch can only collect and understand an unchangeable intention. When a new intention and a change in intention appear, the device will not be able to understand the new intention and the change in intention, and the application cannot be launched. For example, an online shopping application needs to increase the concurrency value for user access, increase the number of application instances, and increase a bandwidth of a link, but the device cannot directly collect these new intentions and lacks the scalability.

In addition, the device can only use pre-configured network activation schemes to activate the network. However, the pre-configured network activation schemes are limited and are unable to being self-adaptive to a new scenario or networking requirement. For example, for a new scenario (such as a scenario where an application needs to be deployed across DCNs, a scenario where an application needs to be deployed across public and private clouds, etc.) and a new networking requirement (such as the DCN breakout gateway supporting access to WAN Segment Routing over Internet Protocol Version 6 (SRv6) tunnels), the network activation scheme needs to be re-configured to achieve adaptation and conversion logic for the new scenario and the new networking requirement.

In order to improve the ability to understand the user's service-level intention, improve the scalability of intention collecting, and improve the adaptability to scenarios and networking, an example of the present disclosure provides a network activation method for application launch, which is applied to an electronic device such as a computer, a server, and an SDN controller. For ease of description, the electronic device is used as an execution body in the following, which do not constitute a limitation of the present disclosure.

Referring to Figure 7, which is a schematic flow chart of a network activation method for application launch provided by an example of the present disclosure. The method includes the following blocks.

Block S71, based on a human-computer interaction mode, collecting a first natural language for indicating an application launch service intention.

Block S72, inputting the first natural language into an AI network large model to obtain a target network activation scheme.

Block S73, performing simulation and evaluation on the target network activation scheme.

Block S74, after a result of the simulation and evaluation meets a preset condition, activating a network based on the target network activation scheme.

In the technical solution provided by the example of the present disclosure, the natural language is used to express a user intention, that is, the application launch service intention. The natural language is a language that is easy for the user to understand without a professional knowledge background. Therefore, the natural language is used to express the user intention, to realize network activation for application launch, which improves the ability to understand the user's service-level intention. In addition, in the technical solution provided by the example of the present disclosure, the AI network large model is used to analyze and process the natural language (i.e., the first natural language) for expressing the user intention, so as to obtain the target network activation scheme that meets the application launch service intention. Since the AI network large model has a strong capability to process the natural language, there is no need for pre-configured network activation schemes and intentions. That is, even if a new intention and a change in intention appear, or a change in the scenario and the networking requirement appears, the AI network large model can perform analysis to obtain the required target network activation scheme, thereby improving the scalability of intention collecting, and improving the adaptability to scenarios and networking.

The network activation method for application launch provided by the example of the present disclosure may include four phases: an intention sensing phase corresponding to block S71, an intention analysis phase corresponding to block S72, an intention decision-making phase corresponding to block S73, and an intention execution phase corresponding to block S74.

In the above block S71, the first natural language is any natural language used to indicate the application launch service intention. The first natural language can be text or voice, etc., and the form of the first natural language is not limited here.

The electronic device can provide multiple human-computer interaction modes for the user, and the user inputs the first natural language into the electronic device through the multiple human-computer interaction modes, and then the electronic device collects the first natural language input by the user based on the multiple human-computer interaction modes.

In one example, the electronic device provides a human-computer interaction dialog box, and then the above block S71 may be: presenting the human-computer interaction dialog box; receiving the first natural language indicating the application launch service intention, which is input by the user on the human-computer interaction dialog box.

For example, the electronic device presents the human-computer interaction dialog box, and the user inputs text on the human-computer interaction dialog box. After the electronic device detects the text on the human-computer interaction dialog box, the electronic device uses the text as the first natural language.

For another example, the electronic device presents the human-computer interaction dialog box, and the user inputs voice on the human-computer interaction dialog box. The electronic device can receive the voice input by the user through a voice receiver (such as a microphone), and directly use the voice as the first natural language; or, identify the voice, convert the voice into text, and then use the text as the first natural language.

Through the human-computer interaction dialog box, the interaction between the user and the electronic device can be presented intuitively, which improves the friendliness of the network activation method for application launch.

When the human-computer interaction dialog box is used for human-computer interaction, the electronic device may also display, on the human-computer interaction dialog box, prompt information (i.e., first prompt information) for guiding the input of the application launch service intention. The first prompt information may include specific content that the user needs to input into the human-computer interaction dialog box, such as the first prompt information may include "application name", "how many services does the application consist of", etc. The first prompt information may also include a requirement for the content input by the user, such as the first prompt information may include "please use a natural language to input a network requirement for application launch", etc. The content of the first prompt information is not limited here. By displaying the first prompt information on the human-computer interaction dialog box, the electronic device can guide the user to input the service intention, to more accurately meet the user's needs and facilitate the user to operate.

In another example, the electronic device can also receive a natural language input by the user on other devices, and use the natural language as the first natural language. Taking the electronic device being personal computer (PC) equipment and the other device being mobile phone equipment as an example, the user can input the natural language on the mobile phone equipment, and the mobile phone equipment sends the natural language to the PC equipment, and the PC equipment uses the received natural language as the first natural language. The human-computer interaction mode between the electronic device and the user is not limited here.

In the above block S72, the AI network large model can be a general AI network large model, or can be an AI network large model pre-trained based on the general AI network large model in combination with a large amount of DCN corpuses, and there is no limitation. For the AI network large model, the process of training it is that the DCN corpuses are input into the AI network large model, and the AI network large model will learn the contextual knowledge in the DCN corpuses after obtaining the DCN corpuses.

In the example of the present disclosure, the DCN corpuses may include DCN networking information, topology information, device information, logical network information, information about the mapping relationship between an application network and a logical network, information about the mapping relationship between a logical network and a physical network, link information, port information, security information, routing information, network strategy information, reliability information, consistency information, stability information, performance load information, capacity information, system information and resource information, etc. The DCN corpuses are not limited here.

The electronic device inputs the collected first natural language into the AI network large model, so that the AI network large model outputs a network activation scheme that meets the user's application launch service intention based on the first natural language, and the electronic device uses the network activation scheme output by the AI network large model as the target network activation scheme.

In the example of the present disclosure, the electronic device can call an interface (i.e., a first interface) corresponding to the AI network large model to input the first natural language into the AI network large model. The interface can be an application programming interface (API), and the first interface is an API corresponding to the AI network large model. The manner in which the electronic device inputs the first natural language into the AI network large model is not limited here.

In the above block S73, after obtaining the target network activation scheme, the electronic device performs simulation and evaluation on the target network activation scheme and obtains a result of the simulation and evaluation, so as to ensure the reliability of the application launch service based on the target network activation scheme and ensure that the target network activation scheme can be operated as expected.

In the example of the present disclosure, the electronic device can simulate and evaluate the target network activation scheme based on a simulation platform. For example, the electronic device can simulate the activation of the network according to the target network activation scheme, so as to obtain a specific situation after the application is launched, and can perform a comprehensive simulation and evaluation on the target network activation scheme from multiple perspectives, such as the satisfaction degree of the current network resources, the expected connectivity between the services, and the impact on the current network, and confirm the result of the simulation and evaluation by viewing the simulation report.

In the above block S74, the preset condition can be a result of passing verification of the simulation and evaluation from the multiple perspectives, which can be set according to the actual situation and is not limited here. The target network activation scheme meeting the preset condition means that the target network activation scheme successfully passes verification of the simulation and evaluation.

After the target network activation scheme successfully passes verification of the simulation and evaluation, the electronic device activates the network according to the target network activation scheme, issues a network configuration corresponding to the target network activation scheme to a network device (i.e., the current network device) in the production environment, and outputs an issuing report, to realize network activation and application launch.

In an example of the present disclosure, if the target network activation scheme does not meet the preset condition (i.e., the target network activation scheme fails to pass verification of the simulation and evaluation), the electronic device can feedback a message that the simulation and evaluation has failed to the user, and return to the intention analysis phase (i.e., block S72), adjust the target network activation scheme to obtain a new target network activation scheme, and then simulate and evaluate the new target network activation scheme. The electronic device will repeat adjusting as such until the target network activation scheme meets the preset condition.

In order to complete the network activation and application launch as soon as possible, the result of the simulation and evaluation may include a specific factor that leads to the failure of the simulation and evaluation, so that the user can adjust the target network activation scheme in a targeted manner and overcome the problem of failure of the simulation and evaluation.

In some examples, referring to Figure 8, which is a detailed schematic diagram of block S72 provided by an example of the present disclosure, the above block S72 may include the following blocks.

Block S81, matching the first natural language with pieces of knowledge of multiple pre-stored network activation schemes to obtain multiple pieces of candidate knowledge.

Block S82, inputting the first natural language and the multiple pieces of candidate knowledge into the AI network large model to obtain the target network activation scheme.

In the technical solution provided by the example of the present disclosure, the electronic device pre-establishes a scheme knowledge base that includes the pieces of knowledge of multiple network activation schemes, and uses a scheme knowledge base with enrich network experience as an effective supplement to recommend a network activation scheme by the AI network large model in the application launch scenario, so that the AI network large model can recommend the target network activation scheme based on the application launch service intention and the candidate knowledge screened out from the scheme knowledge base, thereby improving the accuracy of recommending the network activation scheme.

In the above block S81, the network activation scheme knowledge is related to the application launch scenario, and may be text information of the actual network activation scheme, or may be text information based on which the network activation scheme is generated, and there is no limitation on this.

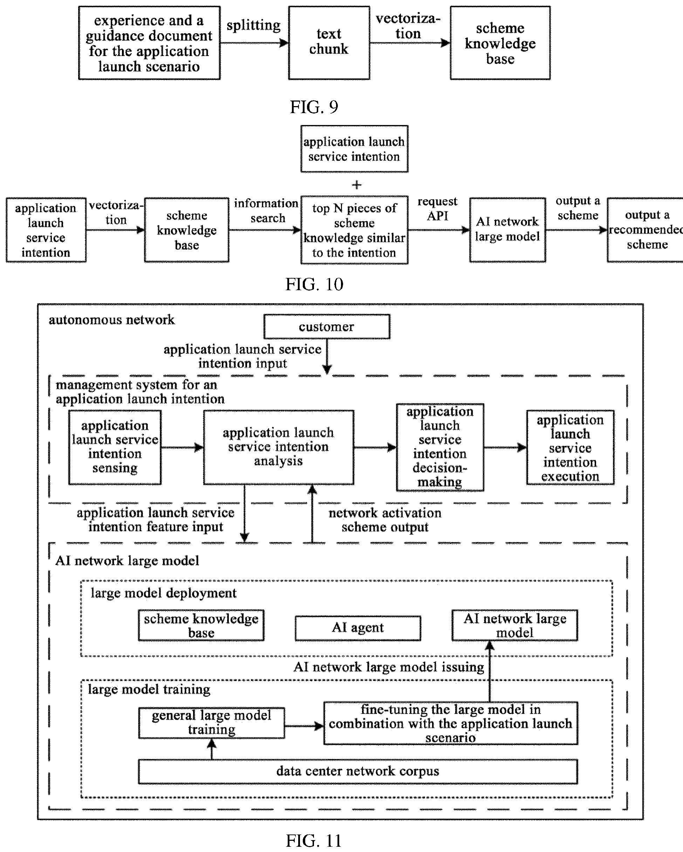

In the example of the present disclosure, the electronic device can establish the scheme knowledge base by the following operations: obtaining experience and a guidance document related to the application launch scenario as original knowledge, splitting the original knowledge into multiple text chunks, and vectorizing each text chunk, and storing each vectorized text chunk as a piece of knowledge of the network activation scheme in a data base, to obtain the pieces of knowledge of multiple network activation schemes, thereby forming the scheme knowledge base. A schematic diagram of a process for establishing a scheme knowledge base is shown in Figure 9. The original knowledge may include a scheme scenario, a service requirement, a design principle, design experience, an implementation case, scheme value and other knowledge, and the content of the original knowledge and the manner in which the electronic device establishes the scheme knowledge base are not limited here.

In an example of the present disclosure, the vectorization can be performed by: determining, according to a pre-stored correspondence between characters and feature values, the feature value corresponding to each character in the text chunk, and string feature values corresponding to characters together in the order of the characters, to obtain a vector corresponding to the text chunk, thereby realizing the vectorization of the text chunk.

The vectorization can also be performed by: pre-processing the text chunk to remove an useless string such as an invalid character, a conjunction and so on, for example to remove a comma, a space, "and", "but" and other words; according to a pre-stored correspondence between characters and feature values, determining a feature value corresponding to each character in the pre-processed text chunk; and string feature values corresponding to characters together in the order of the characters, to obtain a vector corresponding to the text chunk, thereby realizing the vectorization of the text chunk.

In the examples of the present disclosure, the vectorization can also be implemented in other manners, as long as the text chunk is converted into a vector represented by 0 and 1.

After collecting the first natural language, the electronic device vectorizes the first natural language. Here, the electronic device can use the first natural language as a text chunk, and convert the first natural language into a vector represented by 0 and 1 by using the above method of vectorizing the text chunk, to obtain the vectorized first natural language.

The electronic device can use a similarity algorithm such as cosine similarity and Euclidean distance and so on to perform a similarity matching between the vectorized first natural language and the pieces of knowledge of multiple network activation schemes in the scheme knowledge base. Based on the matching result, the top preset number of vectors that are most similar to the first natural language are obtained, that is, the multiple pieces of knowledge of network activation schemes that are most similar to the application launch service intention are obtained. These multiple pieces of knowledge of network activation schemes are the multiple pieces of candidate knowledge, and there is no limitation on the value of the preset number.

In the example of the present disclosure, corresponding to the network activation scheme knowledge in the scheme knowledge base, the multiple pieces of candidate knowledge obtained by the electronic device can be text information of the actual network activation scheme, or can be text information based on which the network activation scheme is generated, which is not limited .

In the example of the present disclosure, the electronic device can continuously update the scheme knowledge base. That is, the electronic device can obtain the experience and the guidance document (that is, the original knowledge) related to the new application launch scenario, split and vectorize the new original knowledge and then store it in the data base, thus enabling update of the scheme knowledge base. Further, the electronic device can use the updated scheme knowledge base for matching, to obtain the enricher and more accurate multiple pieces of candidate knowledge, which is not limited.

In the above block S82, the electronic device uses the obtained multiple pieces of candidate knowledge as context, adds it and the first natural language to a prompt template, and inputs the added prompt template into the AI network large model, so that the AI network large model performs a context reasoning such as information combination and exclusion based on the multiple pieces of candidate knowledge according to the application launch service intention, obtains and outputs a recommended network activation scheme. The electronic device uses the network activation scheme output by the AI network large model as the target network activation scheme.

In an example of the present disclosure, the electronic device can call a request interface to input the first natural language and the multiple pieces of candidate knowledge (i.e., the added prompt template) into the AI network large model, which is not limited.

The complete process of the electronic device obtaining the target network activation scheme based on the AI network large model is shown in Figure 10. The electronic device collects the application launch service intention (i.e., the first natural language) input by the user, vectorizes the application launch service intention, and then searches information in the scheme knowledge base, that is, performs the similarity matching between the vectorized application launch service intention and the vectorized text chunks in the scheme knowledge base, to obtain the top N (i.e., the preset number) pieces of knowledge of network activation schemes (i.e., the candidate knowledge) with the highest similarity to the application launch service intention. The electronic device calls a request API (i.e., the request interface) and inputs the obtained top N pieces of scheme knowledge and the application launch service intention into the AI network large model, so that the AI network large model performs context reasoning based on the top N network activation schemes with the highest similarity and the application launch service intention, and then outputs a recommended scheme, i.e., the target network activation scheme.

In the example of the present disclosure, if the first natural language fails to match the pieces of knowledge of multiple network activation schemes (i.e., no candidate knowledge is obtained), it means that the similarity between the pieces of knowledge of multiple network activation schemes and the first natural language is too low. The electronic device can directly input the first natural language (i.e., the application launch service intention input by the user) into the AI network large model. The AI network large model performs context reasoning only based on the first natural language and pre-learned knowledge to obtain the target network activation scheme, thereby further improving the adaptability of the network activation method for application launch provided by the example of the present disclosure to scenarios and networking.

Here, the pre-learned knowledge may be the knowledge input into the AI large language model by the electronic device during a training phase and a pre-training phase.

In some examples, the electronic device can fine-tune the AI network large model. The electronic device obtains a sample natural language and a sample network activation scheme corresponding to the sample natural language; and uses the sample natural language and the sample network activation scheme to fine-tune the AI network large model. The sample natural language and the sample network activation scheme corresponding to the sample natural language are a sample of a pre-built application launch scenario. One sample is a piece of labeled data. The content of the sample is the sample natural language. The label of the sample is a real network activation scheme corresponding to the sample natural language, that is, the sample network activation scheme.

The electronic device can use samples of multiple application launch scenarios (i.e., multiple pieces of sample natural language and sample network activation schemes corresponding to the multiple pieces of sample natural language) to build a sample set of the application launch scenarios (i.e., a labeled data set) in advance. The sample set is actually multiple sets of question-answer pairs, wherein the question is a sample natural language and the answer is a sample network activation scheme. The electronic device inputs the sample set into the AI network large model to enable the AI network large model to learn these question-answer pairs and complete fine-tuning of the AI network large model.

In the example of the present disclosure, the electronic device can continuously update the sample set of the application launch scenarios, that is, the electronic device can continuously obtain a new sample natural language and a sample network activation scheme corresponding to the sample natural language, so as to fine-tune the AI network large model.

The electronic device can also continuously update DCN corpuses, and use the updated DCN corpuses, enrich application launch scenarios, and a continuously updated scheme knowledge base to train and update the AI network large model. There is no limitation on the way in which the AI network large model is trained and updated.

With the technical solution provided by the example of the present disclosure, the AI network large model is fine-tuned by using the labeled data set of the application launch scenarios, so that the AI network large model is more adaptable to the application launch scenarios, and then, the electronic device can achieve self-evolution and development when activating the network in the application launch scenario. In addition, the electronic device can also use the continuously updated scheme knowledge base, the new DCN corpus and the enrich application launch scenarios to train and update the AI network large model, to achieve the self-evolution and development of the capability of recommending and generating the network activation scheme in the application launch scenario, thereby further improving the capability of the electronic device to achieve self-evolution and development.

Figure 11 shows a schematic diagram of a processing logic in an intention analysis phase, taking the electronic device being a management system for an application launch intention as an example. In the data center autonomous network, the management system for the application launch intention receives an application launch service intention (i.e., a first natural language) input by a customer (i.e., a user), and performs application launch intention sensing, application launch intention analysis, application launch intention decision-making, and application launch intention execution. In the intention analysis phase, the management system for the application launch intention analyzes and extracts a feature (i.e., vectorization) of the application launch service intention, to obtain the application launch intention feature (i.e., the vectorized first natural language), and inputs the application launch intention feature into the network large model (such as an AI network large model).

In the example of the present disclosure, when deploying the AI network large model, the scheme knowledge base and an AI Agent framework that assist the AI network large model can also be deployed. The management system for the application launch intention outputs a network activation scheme (i.e., the target network activation scheme) based on the scheme knowledge base, the AI agent, and the AI network large model.

Wherein, the scheme knowledge base can assist the AI network large model to perform context reasoning with less but most relevant knowledge, to obtain the target network activation scheme. The AI agent framework can call the enrich APIs of a SDN controller based on a tool set, and can realize a capability of graphically presenting the scheme for the application launch scenario and other capabilities. The AI agent framework can continuously enrich the tool set for the interaction of application launch scenario with the SDN controller, thereby improving the capability of the intention execution for the application launch scenario.

As shown in Figure 11, the large model training method can be performed by: using the DCN corpuses to train a general large model, and then fine-tune the trained large model in combination with the labeled data set of the application launch scenario, and finally obtain and issue a reliable AI network large model.

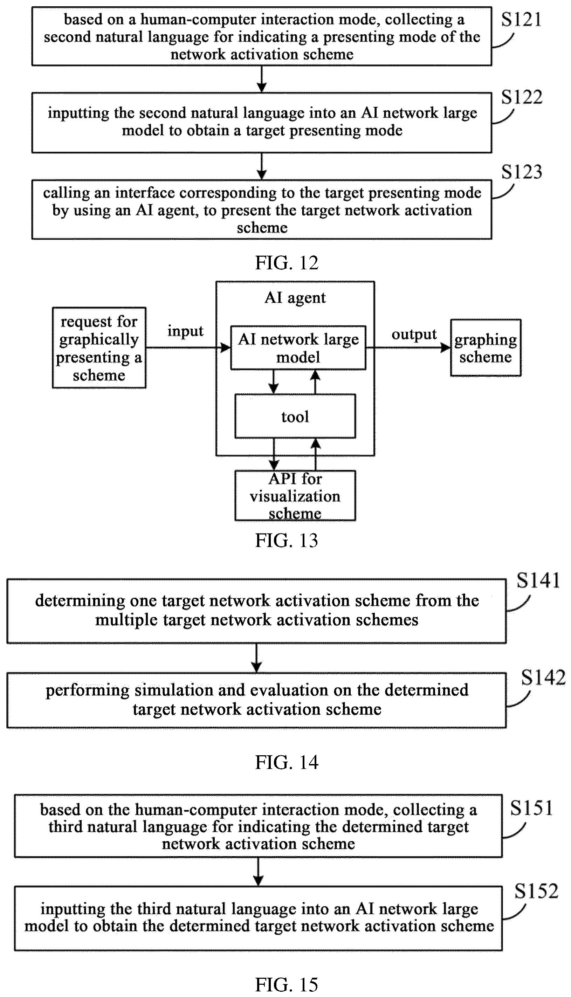

In some examples, the electronic device can present the network activation scheme based on the human-computer interaction mode. Referring to Figure 12, which is a schematic flow chart of presenting a network activation scheme provided by an example of the present disclosure, including the following blocks.

Block S121, based on a human-computer interaction mode, collecting a second natural language for indicating a presenting mode of the network activation scheme.

Block S122, inputting the second natural language into an AI network large model to obtain a target presenting mode.

Block S123, calling an interface corresponding to the target presenting mode by using an AI agent, to present the target network activation scheme.

In the technical solution provided by the example of the present disclosure, based on a strong capability of processing natural language of the AI network large model, the AI network large model is used to analyze and process the natural language (i.e., the second natural language) for expressing the presenting mode required by a user, to obtain the target presenting mode, thereby improving interactivity, and call a corresponding API by using an AI agent, to present the target network activation scheme in the target presenting mode.

In the above block S121, the second natural language is any natural language used to indicate the presenting mode of the network activation scheme. The second natural language can be text or voice, etc. The presenting mode of the network activation scheme can include presenting in the form of text and presenting in the form of graphics, etc. The form of the second natural language and the presenting mode of the network activation scheme are not limited here.

The electronic device can provide multiple human-computer interaction modes for the user, and the user inputs the second natural language into the electronic device through the multiple human-computer interaction modes, and then the electronic device collects the second natural language input by the user based on the multiple human-computer interaction modes.

When the electronic device provides a human-computer interaction dialog box, the above block S121 may be: presenting the human-computer interaction dialog box; receiving the second natural language for indicating the presenting mode of the network activation scheme, which is input by the user on the human-computer interaction dialog box. In this case, the electronic device may also display, on the human-computer interaction dialog box, prompt information (i.e., second prompt information) for guiding the input of the presenting mode of the network activation scheme. For example, the second prompt information may be "Please input a presenting mode", etc. The content of the second prompt information is not limited here. Through the human-computer interaction dialog box, the interaction between the user and the electronic device can be presented intuitively. By displaying the prompt information on the human-computer interaction dialog box, the user can be guided when performing the input, which meets the user's needs and facilitates the user to operate.

In the example of the present disclosure, the way in which the electronic device collects the second natural language based on the human-computer interaction mode is similar to the way in which the first natural language is collected. For details, the relevant description of the above block S71 can be referred.

In the above block S122, the electronic device inputs the collected second natural language into the AI network large model, so that the AI network large model outputs a presenting mode that meets the user's needs based on the second natural language, and the electronic device uses the presenting mode as the target presenting mode.

In the example of the present disclosure, the electronic device can call the interface corresponding to the AI network large model (i.e., the first interface) to input the second natural language into the AI network large model, which is not limited.

In the above block S123, the electronic device calls the interface (i.e., the second interface) corresponding to the target presenting mode by using an AI agent, to present the target network activation scheme based on the target presenting mode.

For example, if the target presenting mode is to present in the form of graphics (i.e., graphical presentation), the electronic device calls an interface corresponding to the graphical presentation by using the AI agent, and presents the target network activation scheme graphically; if the target presenting mode is to present in the form of text, the electronic device calls an interface corresponding to the textual presentation by using the AI agent, and presents the target network activation scheme in the form of text.

Figure 13 shows a schematic diagram of a graphical presentation using an AI agent framework. The electronic device obtains a request (i.e., the second natural language) for graphically presenting a network activation scheme input by a user, and inputs the request into the AI agent framework. The AI network large model performs reasoning and decision-making on the request and outputs a graphical presenting mode. The AI agent selects a preset tool to call an API for visualization scheme (i.e., the second interface) and outputs the network activation scheme presented graphically.

In an example of the present disclosure, the electronic device may execute blocks S121 to S123 after obtaining the target network activation scheme to present the obtained target network activation scheme. The electronic device may also execute blocks S121 to S122 before obtaining the target network activation scheme to obtain the target presenting mode, and execute block S123 after obtaining the target network activation scheme to present the obtained target network activation scheme. For example, when collecting the first natural language, the electronic device may collect the second natural language at the same time, input the first and second natural languages into the AI network large model together, to obtain the target network activation scheme and the target presenting mode; the electronic device may also collect the second natural language after collecting the first natural language. There is no limitation on when executing the blocks S121 to S123.

In some examples, the above block S73 can be implemented by the following operations: adjusting the presented target network activation scheme based on a user operation; and simulating and evaluating the adjusted target network activation scheme. The user operation can be an operation such as dragging and editing, which are not limited here. After executing the above block S123 of presenting the target network activation scheme, the electronic device can provide the user with multiple human-computer interaction modes, and the user operates the presented target network activation scheme through the multiple human-computer interaction modes; and then the electronic device collects the user's operation based on the multiple human-computer interaction modes, and adjusts the presented target network activation scheme based on the user's operation.

For example, when the target presenting mode is to present graphically, the electronic device can perform human-computer interaction based on the graphical interface, collect the operations such as dragging and editing performed by the user on the presented target network activation scheme in the graphical interface, and perform corresponding dragging and editing operations on the presented target network activation scheme based on the collected operations to adjust the target network activation scheme. In the example of the present disclosure, the electronic device can also adjust the presented target network activation scheme based on the human-computer interaction dialog box, which is not limited.

The electronic device adjusts the presented target network activation scheme based on the user operations, so that the adjusted target network activation scheme is more in line with the user's service intention and meets the user's expectations. Then the electronic device simulates and evaluates the adjusted target network activation scheme.

In some examples, in the above block S72, the AI network large model can output multiple target network activation schemes. Referring to Figure 14, which is a first schematic flow chart of block S73 provided by an example of the present disclosure, the above block S73 may include the following blocks.

Block S141, determining one target network activation scheme from the multiple target network activation schemes.

Block S142, performing simulation and evaluation on the determined target network activation scheme.

In the technical solution provided by the example of the present disclosure, when the AI network large model outputs the multiple target network activation schemes, the electronic device can determine one target network activation scheme that best meets the user's application launch service intention from the multiple target network activation schemes, thereby further improving the accuracy of generating and recommending the network activation scheme.

In the above block S141, the electronic device determines one target network activation scheme from the multiple target network activation schemes output by the AI network large model. For example, the electronic device can receive information input by the user for indicating the determined target network activation scheme, and determine one target network activation scheme based on the information input by the user. For another example, the electronic device can randomly determine one target network activation scheme from the multiple target network activation schemes; or, the electronic device can also determine one target network activation scheme from the multiple target network activation schemes according to a preset rule. The preset rule can be set according to actual conditions, and the preset rule can be: selecting the safest network activation scheme. The way in which the electronic device determines one target network activation scheme is not limited here.

In the above block S142, the electronic device performs simulation and evaluation on the determined one target network activation scheme. For details, the relevant description in the above block S73 can be referred.

In the example of the present disclosure, before executing the block S141, the electronic device may present the multiple target network activation schemes output by the AI network large model. The specific presenting mode can be referred to the above relevant description in Figure 12. After presenting the multiple target network activation schemes, the electronic device may also fine-tune the presented multiple target network activation schemes, determine one fine-tuned target network activation scheme from the multiple fine-tuned target network activation schemes, and perform simulation and evaluation on the determined fine-tuned target network activation scheme.

In some examples, the electronic device may determine one target network activation scheme based on a human-computer interaction mode. Referring to Figure 15, which is a detailed schematic diagram of block S141 provided by an example of the present disclosure, the block S141 may include the following blocks.

Block S151, based on the human-computer interaction mode, collecting a third natural language for indicating the determined target network activation scheme.

Block S152, inputting the third natural language into an AI network large model to obtain the determined target network activation scheme.

In the technical solution provided by the example of the present disclosure, based on a strong capability of processing natural language of the AI network large model, the AI network large model is used to analyze and process the natural language (i.e., the third natural language) that expresses user's needs and determines the target network activation scheme, so as to obtain the determined target network activation scheme, thereby improving interactivity, and enabling the determined target network activation scheme to be more in line with user expectations, thereby improving user experience.

In the above block S151, the third natural language is any natural language used to indicate the determined target network activation scheme. The third natural language may be text or voice, etc., and the form of the third natural language is not limited here.

The electronic device can provide multiple human-computer interaction modes for the user, and the user inputs the third natural language into the electronic device through the multiple human-computer interaction modes, and then the electronic device collects the third natural language input by the user based on the multiple human-computer interaction modes.

When the electronic device provides a human-computer interaction dialog box, the above block S151 may be: presenting the human-computer interaction dialog box; receiving the third natural language for indicating the determined target network activation scheme, which is input by the user on the human-computer interaction dialog box. In this case, the electronic device may also display, on the human-computer interaction dialog box, prompt information (i.e., third prompt information) for guiding the input of the determined target network activation scheme. For example, the third prompt information may be "please input the determined network activation scheme" or "please input the tendency of the overall requirements for the network activation scheme", etc. The content of the third prompt information is not limited here. Through the human-computer interaction dialog box, the interaction between the user and the electronic device can be presented intuitively. By displaying the prompt information on the human-computer interaction dialog box, the user can be guided to input relevant information for determining the target network activation scheme, which meets the user's needs and facilitates the user to operate.

In the example of the present disclosure, the way in which the electronic device collects the third natural language based on the human-computer interaction mode is similar to the way in which the first natural language is collected. For details, the above relevant description of the block S71 can be referred.

In the above block S152, the electronic device inputs the collected third natural language into the AI network large model, so that the AI network large model outputs a target network activation scheme based on the third natural language, and the electronic device uses the target network activation scheme as the determined target network activation scheme.

In the example of the present disclosure, the electronic device can call the interface (i.e., the first interface) corresponding to the AI network large model to input the third natural language into the AI network large model, which is not limited.

In the example of the present disclosure, according to when the block S151 and block S152 are executed, there are two cases specifically as below.

Case 1, after obtaining the multiple target network activation schemes, the electronic device executes the blocks S151 and S152 to collect the third natural language and obtain the determined target network activation scheme.

Case 2, before obtaining the multiple target network activation schemes, the electronic device executes the block S151 to collect the third natural language. For example, the electronic device can collect the third natural language when collecting the first natural language. In this case, the electronic device can simultaneously execute the block S72 and block S152, to input the first and third natural languages into the AI network large model together, and obtain the determined target network activation scheme. That is, when the application launch service intention input by the user carries the tendency of the overall requirements for the network activation scheme, the electronic device can input all of the content input by the user, including the first and third natural languages, into the AI network large model, so that the AI network large model outputs one target network activation scheme and obtains the determined target network activation scheme. The timing of execution of the blocks S151 and S152 is not limited here.

The electronic device may also receive an operation of selecting the target network activation scheme performed by a user on the electronic device, such as clicking or switching, and determine one target network activation scheme from the multiple target network activation schemes in response to the user's operation. The way in which the electronic device determines one target network activation scheme is not limited herein.

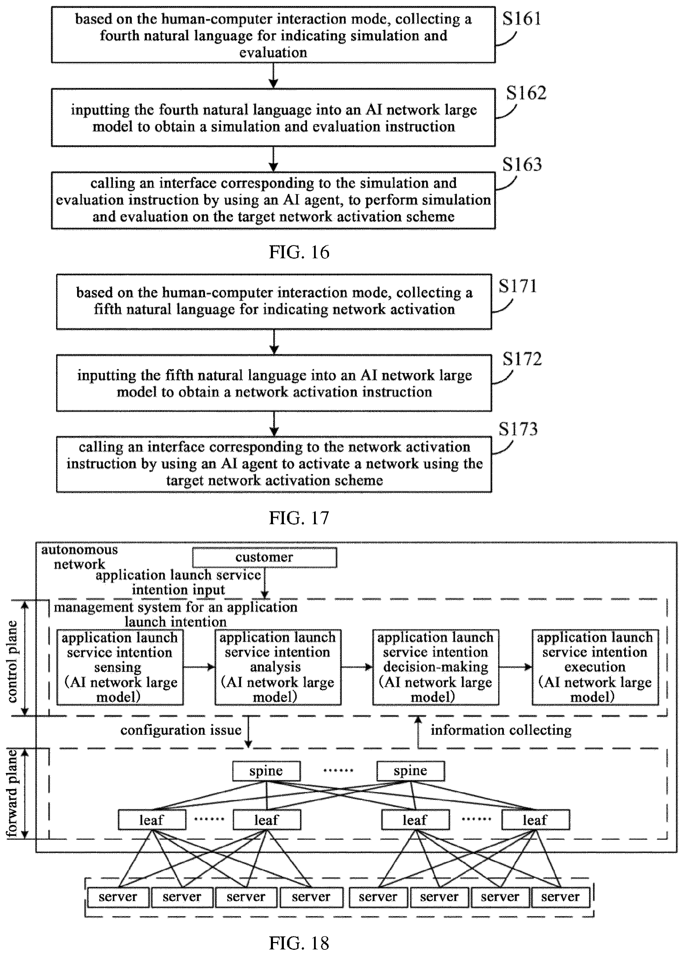

In some examples, the electronic device can simulate and evaluate the target network activation scheme based on the human-computer interaction mode. Referring to Figure 16, which is a second schematic flow chart of block S73 provided by an example of the present disclosure, the above block S73 can include the following blocks.

Block S161, based on the human-computer interaction mode, collecting a fourth natural language for indicating simulation and evaluation.

Block S162, inputting the fourth natural language into an AI network large model to obtain a simulation and evaluation instruction.

Block S163, calling an interface corresponding to the simulation and evaluation instruction by using an AI agent, to perform simulation and evaluation on the target network activation scheme.

In the technical solution provided by the example of the present disclosure, based on a strong capability of processing natural language of the AI network large model, the AI network large model is used to analyze and process the natural language (i.e., the fourth natural language) for expressing simulation and evaluation, to obtain the simulation and evaluation instruction, and call a corresponding API by using the AI agent, to realize simulation and evaluation of the target network activation scheme.

In the above block S161, the fourth natural language is any natural language used to indicate simulation and evaluation. The fourth natural language may be text or voice, etc., and the form of the fourth natural language is not limited herein.

The electronic device can provide multiple human-computer interaction modes for the user, and the user inputs the fourth natural language into the electronic device through the multiple human-computer interaction modes, and then the electronic device collects the fourth natural language input by the user based on the multiple human-computer interaction modes.

When the electronic device provides a human-computer interaction dialog box, the above block S161 may be: presenting the human-computer interaction dialog box; receiving a fourth natural language for indicating the simulation and evaluation which is input by the user on the human-computer interaction dialog box. In this case, the electronic device may also display, on the human-computer interaction dialog box, prompt information (i.e., the fourth prompt information ) for guiding the input of execution information of the simulation and evaluation, such as the fourth prompt information may be "Please input whether to perform simulation and evaluation", etc. The content of the fourth prompt information is not limited here. Through the human-computer interaction dialog box, the interaction between the user and the electronic device can be presented intuitively. By displaying the prompt information on the human-computer interaction dialog box, the user can be guided to input relevant information on whether to perform simulation and evaluation, which meets the user's needs and facilitates the user to operate.

In the example of the present disclosure, the way in which the electronic device collects the fourth natural language based on the human-computer interaction mode is similar to the above way in which the first natural language is collected. For details, the above relevant description of the block S71 can be referred.

In the above block S162, the electronic device inputs the collected fourth natural language into the AI network large model, so that the AI network large model outputs the simulation and evaluation instruction based on the fourth natural language.

In the example of the present disclosure, the electronic device can call the interface (i.e., the first interface) corresponding to the AI network large model to input the fourth natural language into the AI network large model, which is not limited.

In the above block S163, the electronic device calls the interface (i.e., the third interface) corresponding to the simulation and evaluation instruction by using the AI agent, to perform simulation and evaluation on the target network activation scheme.

In some examples, after a result of the simulation and evaluation meets the preset condition, the electronic device can activate the network based on the human-computer interaction mode. Referring to Figure 17, which is a schematic flow chart of block S74 provided by an example of the present disclosure, the above block S74 may include the following blocks.

Block S171, based on the human-computer interaction mode, collecting a fifth natural language for indicating network activation.

Block S172, inputting the fifth natural language into an AI network large model to obtain a network activation instruction.

Block S173, calling an interface corresponding to the network activation instruction by using an AI agent, to activate a network using the target network activation scheme.

In the technical solution provided by the example of the present disclosure, based on a strong capability of processing natural language of the AI network large model, the AI network large model is used to analyze and process the natural language (i.e., the fifth natural language) for expressing network activation, to obtain the network activation instruction, and call a corresponding API by using the AI agent, to activate the network using the target network activation scheme and realize application launch.

In the above block S171, the fifth natural language is any natural language used to indicate network activation. The fifth natural language may be text or voice, etc., and the form of the fifth natural language is not limited here.

The electronic device can provide multiple human-computer interaction modes for the user, and the user inputs the fifth natural language into the electronic device through the multiple human-computer interaction modes, and then the electronic device collects the fifth natural language input by the user based on the multiple human-computer interaction modes.

When the electronic device provides a human-computer interaction dialog box, the above block S171 may be: presenting the human-computer interaction dialog box; receiving the fifth natural language for indicating network activation, which is input by the user on the human-computer interaction dialog box. In this case, the electronic device may also display, on the human-computer interaction dialog box, prompt information (i.e., the fifth prompt information) for guiding the input of execution information of network activation, such as the fifth prompt information may be "Please input whether to activate the network and deploy the application", etc. The content of the fifth prompt information is not limited here. Through the human-computer interaction dialog box, the interaction between the user and the electronic device can be presented intuitively. By displaying the prompt information on the human-computer interaction dialog box, the user can be guided to input relevant information on whether to activate the network, which meets the user's needs and facilitates the user to operate.

In some examples, the electronic device can also determine a to-be-executed operation, and display prompt information associated with the to-be-executed operation on the human-computer interaction dialog box. The electronic device can detect the interface (or the phase in which the execution of the scheme has reached) displayed to the user and the content input by the user (or the executed operation) in real time, determine the to-be-executed operation of the electronic device, and display the prompt information associated with the to-be-executed operation on the human-computer interaction dialog box based on the to-be-executed operation. For example, when the electronic device detects that the interface displayed to the user is an intention analysis interface (i.e., in the intention analysis phase), and detects that the content input by the user last time on the human-computer interaction dialog box is a natural language (i.e., the second natural language) for indicating the presenting mode of the network activation scheme, the electronic device can determine that the to-be-executed operation is: determining one target network activation scheme from the target network activation schemes (in the case that the AI network large model outputs multiple target network activation schemes), and displaying, on the human-computer interaction dialog box, the third prompt information for guiding the input of the determined target network activation scheme.

In the example of the present disclosure, the way in which the electronic device collects the fifth natural language based on the human-computer interaction mode is similar to the above way in which the first natural language is collected. For details, the above relevant description of the block S71 can be referred.

In the above block S172, the electronic device inputs the collected fifth natural language into the AI network large model, so that the AI network large model outputs the network activation instruction based on the fifth natural language.

In the example of the present disclosure, the electronic device can call the interface (i.e., the first interface) corresponding to the AI network large model to input the fifth natural language into the AI network large model, which is not limited.

In the above block S173, the electronic device calls the interface (i.e., the fourth interface) corresponding to the network activation instruction by using the AI agent, and uses the target network activation scheme to activate the network, thereby realizing application launch.

In the example of the present disclosure, the electronic device can display a dialog box icon on the interface. After the user clicks on the dialog box icon, the electronic device calls, in response to an operation of the user clicking on the dialog box icon, a front-end general interface (i.e., the fifth interface) corresponding to the operation of clicking on the dialog box icon, and presents the human-computer interaction dialog box.

In the example of the present disclosure, the electronic device can also continuously update the tool set for human-computer interaction, that is, continuously update the interface, so that the electronic device can call an enricher interface and improve the capability of using the AI agent to activate the network in the application launch scenario.

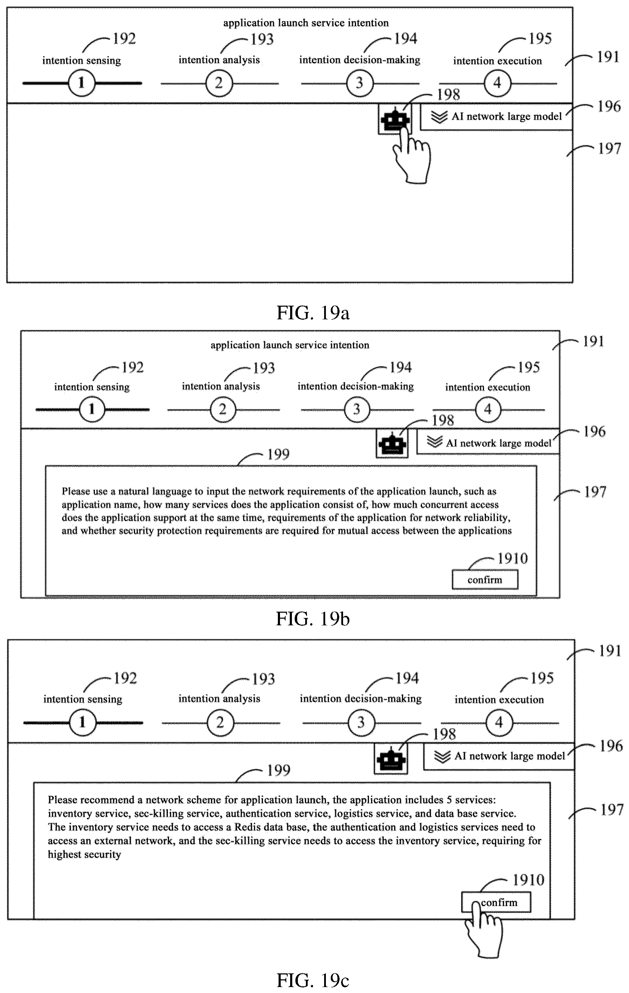

The following is a detailed description of the network activation method for application launch provided by an example of the present disclosure based on a framework of the network activation method for application launch shown in Figure 18 and an SDN controller interface shown in Figures 19a to 19c, Figures 20a to 20e, Figure 21 and Figures 22a to 22b. The electronic device being the SDN controller and the SDN controller performing human-computer interaction based on a human-computer interaction dialog box is taken as an example, which is not limited.

Figure 18 is a schematic structure diagram of a framework of a network activation method for application launch provided by an example of the present disclosure. As shown in Figure 18, in a data center autonomous network, the management system for the application launch intention (i.e., SDN controller) of a control plane of the autonomous network receives the application launch service intention (i.e., the first natural language) input by a customer (i.e., a user), and performs application launch intention sensing, intention analysis, intention decision-making, and intention execution based on the AI network large model, the scheme knowledge base, and the AI agent. After determining the network activation scheme (i.e., the target network activation scheme), the SDN controller issues a configuration to a forwarding plane of the autonomous network, and collects information from the forwarding plane of the autonomous network. The forwarding plane of the autonomous network is a Spine-Leaf architecture, including multiple spine nodes, leaf nodes, and servers. After the network is activated for the application launch, a forwarding path between servers communicating with each other is activated, and the interaction between the servers is completed through the ridge nodes and spine nodes, to realize application launch.

The four phases of network activation for application launch provided by the present disclosure are described in detail below in conjunction with the SDN controller interface shown in Figures 19a to 19c, Figures 20a to 20e, Figure 21, and Figures 22a to 22b.

### 1) Intention sensing Phase

Figures 19a to 19c are first schematic diagrams of an SDN controller interface provided by an example of the present disclosure. Figures 19a to 19c each is a SDN controller interface in the intention sensing phase. As shown in Figures 19a to 19c, the SDN controller interface mainly includes a phase column 191, a model selection icon 196, a display column 197, and an interaction icon 198. Wherein, the phase column 191 includes an intention sensing phase tab 192, an intention analysis phase tab 193, an intention decision-making phase tab 194, and an intention execution phase tab 195, which correspond to the four phases of network activation, respectively. The intention sensing phase tab 192 is in bold, indicating that it is currently in the intention sensing phase.

When the SDN controller interface shown in Figure 19a is displayed, the user can click on the model selection icon 196. In response to an operation of the user clicking on the model selection icon 196, the SDN controller displays multiple models that can be selected by the user for intention analysis (i.e., recommending a network activation scheme). After the user selects a model by clicking, the SDN controller can switch the model for intention analysis in response to the operation of the user selecting a model by clicking. In Figure 19a, the currently used model is the AI network large model.

The user can click on the interaction icon 198 (i.e., the dialog box icon) on the SDN controller interface. In response to an operation of the user clicking on the interaction icon 198, the SDN controller calls the front-end general API (i.e., the fifth interface) corresponding to the operation of the user clicking on the interaction icon 198, and displays, in the display column 197, the human-computer natural language interaction interface (i.e., the human-computer interaction dialog box), that is, the human-computer natural language interaction interface 199 shown in Figure 19b. The human-computer natural language interaction interface 199 may include a confirmation button 1910.

The SDN controller can detect a to-be-executed operation in real time or detect a to-be-executed operation when triggered by an event. The event that triggers the detection of the to-be-executed operation can be that the user clicks an operation event on the interface, the SDN controller or the AI network large model executes and complete an operation event (such as an intention analysis event), etc.

When the SDN controller detects that the current phase is the intention sensing phase and determines that the user has not performed any operation yet, the SDN controller can determine that the to-be-executed operation is to collect the application launch service intention. Then, the SDN controller displays the prompt information (i.e., the first prompt information) associated with the to-be-executed operation in the human-computer natural language interaction interface 199, such as the prompt information displayed in the human-computer natural language interaction interface 199 shown in Figure 19b.

The user can input the natural language (i.e., the first natural language) for expressing the application launch service intention in the human-computer natural language interaction interface 199 according to the prompt information in the human-computer natural language interaction interface 199, such as the natural language displayed in the human-computer natural language interaction interface 199 shown in Figure 19c. The user clicks on the confirmation button 1910; the SDN controller uses the natural language in the human-computer natural language interaction interface 199 as the collected application launch service intention, in response to the user clicking on the confirmation button 1910. The prompt information and service intention shown in Figure 19b and Figure 19c are only examples and do not serve as a limitation here.

In an example of the present disclosure, the interaction icon 198 and the human-computer natural language interaction interface 199 may be suspended on the display column 197, that is, the user may drag the interaction icon 198 and the human-computer natural language interaction interface 199 on the SDN controller interface. In response to the user's dragging operation, the SDN controller calls the front-end general API corresponding to the dragging operation, and moves the interaction icon 198 and the human-computer natural language interaction interface 199.

The user can click on the interaction icon 198 again or click on a blank position in the display column 197. In response to the user clicking on the interaction icon 198 again or clicking on the blank position in the display column 197, the SDN controller calls the front-end general API corresponding to the clicking operation and closes the human-computer natural language interaction interface 199.

The human-computer natural language interaction interface 199 on the SDN controller is not limited to the SDN controller interface in the intention sensing phase, that is, the human-computer natural language interaction interface 199 can also be displayed in the SDN controller interface in the intention analysis phase, the intention decision-making phase and the intention execution phase.

The SDN controller collects the application launch service intention input by the user by using the natural language through providing the human-computer natural language interaction interface on the SDN controller interface of the data center autonomous network and through the capability of calling the integrated AI network large model via the API, the SDN controller. The prompt information for inputting the application launch service intention is preset in the human-computer natural language interaction interface, to guide the user to efficiently input the application launch service intention.

### 2) Intention analysis Phase

In the examples of the present disclosure, the intention analysis phase may be entered in the following methods.

Method 1, in the intention sensing phase, after the user clicks on the confirmation button 1910, the network activation scheme for application launch skips to the intention analysis phase.

Specifically, after the user inputs the application launch service intention in the human-computer natural language interaction interface 199 and clicks on the confirmation button 1910, the SDN controller calls, in response to the user clicking on the confirmation button 191, the front-end general API for skipping to the corresponding interface to skip to the SDN controller interface in the intention analysis phase, and enter the intention analysis phase. At this time, the application launch service intention is the natural language in the human-computer natural language interaction interface 199 when the user clicks on the confirmation button 1910.

Method 2, the user clicks on the intention analysis phase tab 193, and the network activation scheme for application launch skips to the intention analysis phase.

Specifically, after the user inputs the application launch service intention in the human-computer natural language interaction interface 199 and clicks on the confirmation button 1910, the user can click on the intention analysis phase tab 193. In response to the user clicking on the confirmation button 1910, the SDN controller calls the front-end general API for skipping to the corresponding interface, to skip to the SDN controller interface in the intention analysis phase, and enter the intention analysis phase. At this time, the application launch service intention is the natural language in the human-computer natural language interaction interface 199 when the user clicks on the intention analysis phase tab 193.

After entering the intention analysis phase, the SDN controller calls the API (i.e., the first interface) corresponding to the AI network large model, inputs the natural language displayed in the human-computer natural language interaction interface 199 into the AI network large model, and performs intention analysis, to obtain the network activation scheme.

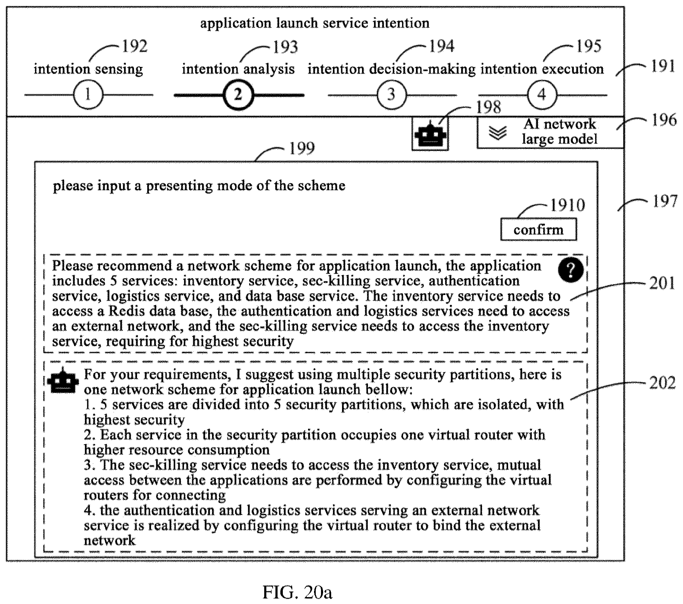

Figures 20a to 20e are second schematic diagrams of an SDN controller interface provided by an example of the present disclosure. Figures 20a to 20e each is a SDN controller interface in the intention analysis phase, and the intention analysis phase tab 193 is in bold.

The human-computer natural language interaction interface 199 may also be presented in the SDN controller interface in the intention analysis phase. For the way in which the human-computer natural language interaction interface 199 is opened and closed, the relevant description of the intention awareness phase can be referred.

When the human-computer natural language interaction interface 199 is opened, historical question and answer information can be displayed in the human-computer natural language interaction interface 199, such as historical question information 201 (i.e., service intention) input by the user into the AI network large model as shown in Figure 20a, and historical answer information 202 (i.e., a scheme description of the target network activation scheme recommended by the AI network large model ) output by the AI network large model as shown in Figure 20a.

In an example of the present disclosure, the application launch service intention input by the user into the AI network large model may include a tendency of overall requirements for the network activation scheme, or may not include a tendency of overall requirements for the network activation scheme; the content of the historical answer information 202 is determined based on whether the historical question information 201 includes a tendency of requirements.

For example, when the application launch service intention includes the tendency of overall requirements for the network activation scheme, taking the tendency of the overall requirements for the network activation scheme being the highest security as an example, the AI network large model can generate a network activation scheme based on the application launch service intention requiring the highest security. The network activation scheme is a network activation scheme with the highest security. The historical answer information output by the AI network large model shows the scheme description of the network activation scheme therein, such as the scheme description in the historical answer information 202 shown in Figure 20a, that is, dividing 5 services into 5 security partitions to maintain isolation and enable highest security; each service in the security partitions occupies one virtual router exclusively, with higher resource consumption; mutual access between the services is performed by configuring the virtual routers for connecting between the services; and servicing an external network service is implemented by configuring the virtual routers to bind to the external network.

For another example, when the application launch service intention does not include the tendency of overall requirements for the network activation scheme, the AI network large model can generate multiple network activation schemes based on the application launch service intention. At this time, the historical answer information output by the AI network large model can include the scheme descriptions of the multiple network activation schemes.

In the example of the present disclosure, the SDN controller can detect that the current phase is the intention analysis phase, and determine that the application launch service intention is collected, and then can determine that the to-be-executed operation is to present the network activation scheme. Accordingly, the SDN controller displays the prompt information (i.e., the second prompt information) associated with the to-be-executed operation in the human-computer natural language interaction interface 199, such as the prompt information displayed in the human-computer natural language interaction interface 199 shown in Figure 20a.

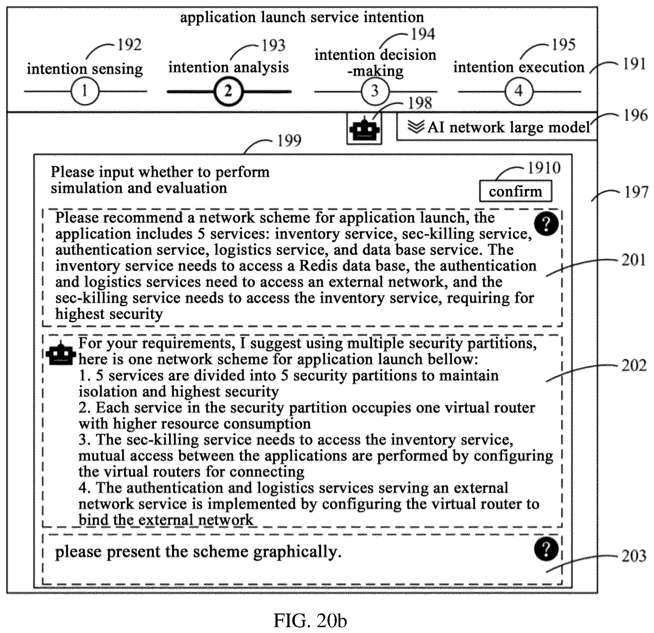

The user can input the natural language (i.e., the second natural language) for expressing the presenting mode in the human-computer natural language interaction interface 199 according to the prompt information in the human-computer natural language interaction interface 199, and click on the confirmation button 1910. The case that the user inputs the natural language for graphical presentation in the human-computer natural language interaction interface 199 is taken as an example for explanation. After the user inputs the natural language for graphical presentation, the corresponding historical information such as the historical question information 203 in Figure 20b can be added to the historical question and answer information in the human-computer natural language interaction interface 199.

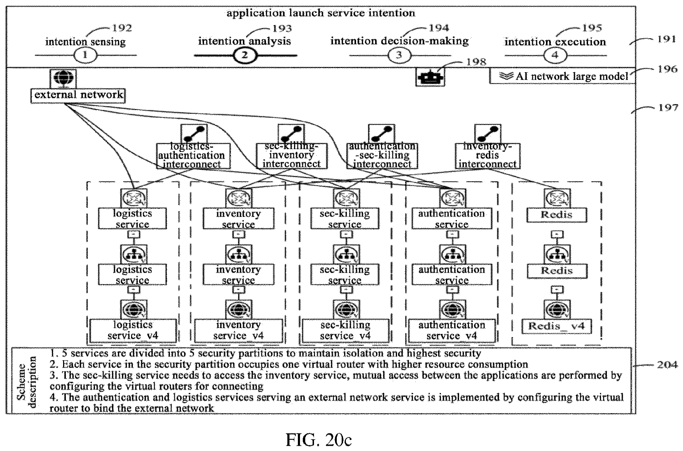

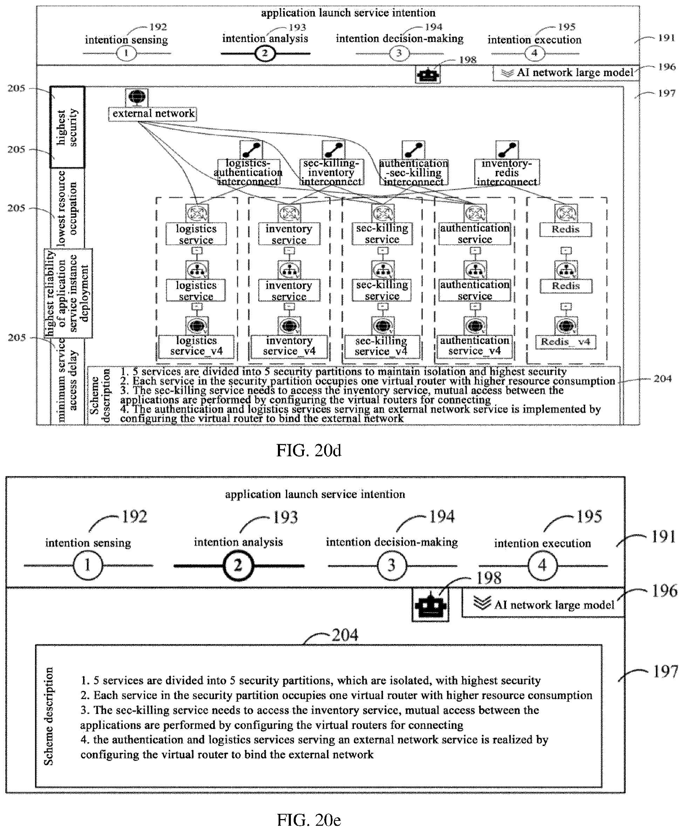

In addition, the user inputs the natural language for expressing a graphical presenting mode in the human-computer natural language interaction interface 199 and clicks on the confirmation button 1910. In response to the operation of the user clicking on the confirmation button 1910, the SDN controller calls the API (i.e., the first interface) corresponding to the AI network large model, and inputs the natural language input by the user into the AI network large model, so that the AI network large model outputs the corresponding presenting mode; further, after obtaining the network activation scheme output by the AI network large model, the SDN controller calls the SDN controller API (i.e., the second interface/API for visualization scheme) corresponding to the presenting mode by using an AI agent, to graphically present the network activation scheme, as shown in Figures 20c and 20d.

Figure 20c is a schematic diagram of an interface in the intention analysis phase when the application launch service intention includes the tendency of overall requirements for the network activation scheme, and Figure 20d is a schematic diagram of an interface in the intention analysis phase when the application launch service intention does not include the tendency of overall requirements for the network activation scheme. In Figures 20c and 20d, the SDN controller closes the human-computer natural language interaction interface 199. In addition, the display column 197 can also include a scheme description 204 of the network activation scheme in the form of text, which is not limited.

The difference between Figures 20c and 20d is that: when the application launch service intention does not include the tendency of overall requirement for the network activation scheme, the display column 197 also includes tabs 205 corresponding to multiple network activation schemes, where different tabs correspond to different network activation schemes. As shown in Figure 20d, the display column 197 includes tabs 205 corresponding to four network activation schemes that are a scheme with the highest security, a scheme with the lowest resource occupation, a scheme with the highest reliability of application service instance deployment, and a scheme with the lowest access delay between services. Under different tabs, different network activation schemes are graphically presented in the display column 197. Currently, the display column 197 is under the tab 205 corresponding to the network activation scheme with the highest security, and the SDN controller graphically presents the network activation scheme with the highest security.

In Figure 20d, the user can click on the tabs 205 corresponding to different network activation schemes. In response to the operation of the user clicking on the corresponding tab 205, the SDN controller calls the corresponding front-end general API and presents the corresponding network activation scheme to the user in the display column 197 for the user to view.

In the example of the present disclosure, when the user does not input a presenting mode, the SDN controller can use a preset presenting mode to present the network activation scheme, for example, present the network activation scheme in the form of text. As shown in Figure 20e, the scheme description 204 of the network activation scheme is presented in the form of text in the display column 197.

In addition, the user can perform operations such as dragging, editing and so on, on the graphically presented network activation scheme in the display column 197, and the SDN controller fine-tunes the network activation scheme in response to the user operations such as dragging, editing and so on.

After presenting the network activation scheme, the SDN controller may determine that the to-be-executed operation is to determine the network activation scheme, and then the prompt information (i.e., third prompt information) for guiding the input of determining the network activation scheme may be displayed in the human-computer natural language interaction interface 199.

The user can input the natural language (i.e., the third natural language) for indicating the determination of the network activation scheme in the human-computer natural language interaction interface 199 according to the prompt information (i.e., the third prompt information) displayed in the human-computer natural language interaction interface 199 for guiding the input of determining the network activation scheme, and click on the confirmation button 1910. In response to the operation of the user clicking on the confirmation button 1910, the SDN controller calls the API (i.e., the first interface) corresponding to the AI network large model, and inputs the natural language input by the user into the AI network large model, such that the AI network large model outputs the determined network activation scheme. By using an AI agent, the SDN controller can call the corresponding API and present the determined network activation scheme in the display column 197.

If the presented network activation scheme does not meet the expectations, the user can continue to input the third natural language until the presented network activation scheme meets the expectations. The operation here has the same effect as that of the above-mentioned user clicking on the tabs 205 corresponding to different network activation schemes and switching to display different network activation schemes.

After determining the network activation scheme, the SDN controller can determine that the to-be-executed operation is to simulate and evaluate, and then prompt information (i.e., the fourth prompt information) for guiding the performing of simulation and evaluation, such as the prompt information in the human-computer natural language interaction interface 199 shown in Figure 20b, can be displayed in the human-computer natural language interaction interface 199.

The user may input the natural language (i.e., a fourth natural language) for indicating the performing of simulation and evaluation in the human-computer natural language interaction interface 199 according to the prompt information in the human-computer natural language interaction interface 199.

In the example of the present disclosure, when the application launch service intention includes the tendency of overall requirement for the network activation scheme, the AI network large model outputs a network activation scheme. At this time, the SDN controller can omit the presenting process of the third prompt information and directly present the fourth prompt information.

In the example of the present disclosure, the default processing flow of the SDN controller in the intention analysis phase is to firstly present the network activation scheme output by the AI network large model, then determining the network activation scheme for simulation and evaluation, and then perform simulation and evaluation. The SDN controller can also change the processing flow based on the user's input. For example, when the prompt information (i.e., the second prompt information) for guiding the presenting mode is displayed in the human-computer natural language interaction interface 199, the user can input the natural language (i.e., the third natural language) for determining the network activation scheme to determine the network activation scheme; then, when the prompt information (i.e., the fourth prompt information) for guiding the input of the execution information of simulation and evaluation is displayed in the human-computer natural language interaction interface 199, the user can input the presenting mode (i.e., the second natural language) to present the network activation scheme. There is no limitation on this.

In practice, the default processing flow of the SDN controller in the intention analysis phase can be set according to actual needs.

### 3) Intention decision-making phase

In an example of the present disclosure, the intention decision-making phase can be entered in the following methods.

Method 1, after the user inputs the fourth natural language in the human-computer natural language interaction interface 199 and clicks on the confirmation button 1910, the network activation scheme for application launch skips to the intention decision-making phase.

Specifically, the user can input the natural language (i.e., the fourth natural language) for indicating to perform simulation and evaluation in the human-computer natural language interaction interface 199, and click on the confirmation button 1910. In response to the operation of the user clicking on the confirmation button 1910, the SDN controller calls the API (i.e., the first interface) corresponding to the AI network large model, inputs the natural language input by the user into the AI network large model, such that the AI network large model outputs the corresponding simulation and evaluation instruction. Then, the SDN controller calls the corresponding API by using the AI agent to, to skip to the SDN controller interface in the intention decision phase, enters the intention decision phase, and performs simulation and evaluation on the determined network activation scheme.

Method 2, the user clicks on the intention decision-making phase tab 194, and the network activation scheme for application launch skips to the intention decision-making phase.

Specifically, in the intention analysis phase, if the user does not input the fourth natural language, the user can click on the intention decision-making phase tab 194. In response to the operation of the user clicking on the intention decision-making phase tab 194, the SDN controller calls the front-end general API for skipping to the corresponding interface, to skip to the SDN controller interface in the intention decision-making phase and enter the intention decision-making phase, and performs simulation and evaluation on the determined network activation scheme.

In an example of the present disclosure, the SDN controller may use the operation of the user clicking on the intention decision phase tab 194 as an instruction for performing simulation and evaluation. After skipping to the SDN controller interface in the intention decision phase, the SDN controller may directly perform simulation and evaluation on the determined network activation scheme. Alternatively, an instruction for performing simulation and evaluation can be additionally input, and the SDN controller then performs simulation and evaluation on the determined network activation scheme after obtaining the instruction for performing simulation and evaluation.

For example, after skipping to the SDN controller interface in the intention decision phase, Method 1 is adopted to input the fourth natural language in the human-computer natural language interaction interface 199 to achieve the purpose of obtaining the simulation and evaluation instruction.

For another example, a starting simulation button can be set on the SDN controller interface in the intention decision-making phase. After skipping to the SDN controller interface in the intention decision-making phase, the user clicks on the starting simulation button; the SDN controller generates the simulation and evaluation instruction in response to the operation of the user clicking on the starting simulation button.

In the example of the present disclosure, the determined network activation scheme is a network activation scheme presented on the display column 197 when the user clicks on the confirmation button 1910 or clicks on the intention decision-making phase tab 194. The determined network activation scheme can be determined by the user by clicking on the tabs 205 corresponding to the different network activation schemes in Figure 20d, or can be determined by the user by inputting the natural language (i.e., a third natural language) for indicating the determination of the network activation scheme in the human-computer natural language interaction interface 199.

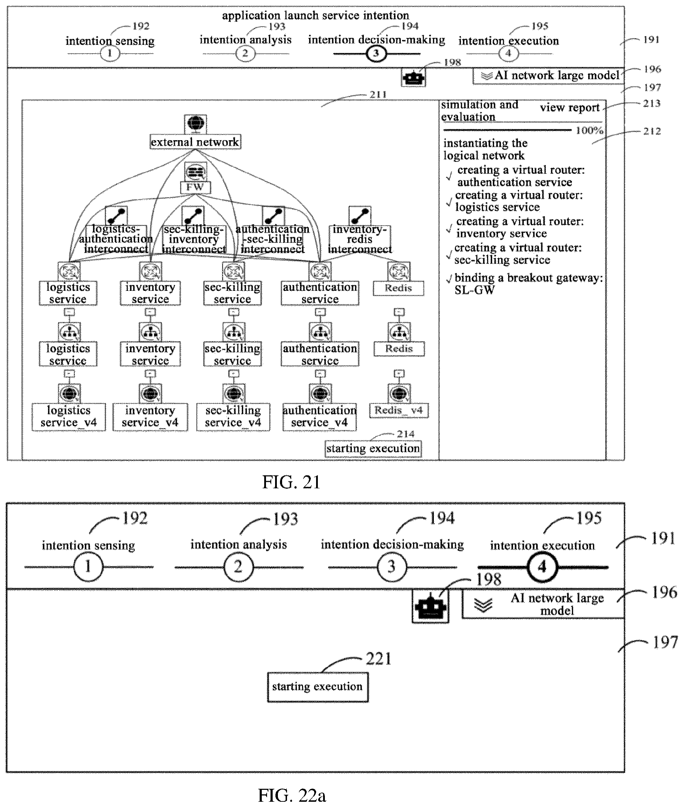

Figure 21 is a third schematic diagram of an SDN controller interface provided by an example of the present disclosure. Figure 21 is the SDN controller interface in the intention decision-making phase, and the intention decision phase tab 194 is in bold.

In Figure 21, the display column 197 includes a simulation interface 211 and a simulation report interface 212. The simulation interface 211 is used to display the topology of the network activation scheme after the configuration is generated, and the simulation report interface 212 is used to display a result of simulation and evaluation. The user can view the simulation and evaluation report in the simulation report interface 212.

When the simulation and evaluation report shows that the simulation and evaluation is successful (i.e., 100%), it means that the network activation scheme has passed verification of the simulation and evaluation (i.e., meets the preset condition). In the example of the present disclosure, the user can click on the view report button 213 in the simulation report interface 212 to view the specific result of simulation and evaluation, and fine-tune the current network activation scheme according to the specific result of simulation and evaluation, or enter the intention execution phase.

In the intention decision-making phase, based on a simulation platform, the SDN controller performs a comprehensive simulation and evaluation on the satisfaction degree of current network resources, the connectivity between expected services, and the impact on the current network after application is launched. The result of simulation and evaluation can be confirmed by viewing the simulation report. After the result of simulation and evaluation meets expectations, the intention execution phase can be entered.

### 4) Intention execution phase

In an example of the present disclosure, the intention execution phase may be entered in the following methods.

Method 1, the user clicks on a starting execution button 214, and the network activation scheme for application launch skips to the intention execution phase.

For example, in Figure 21, the simulation interface 211 may include the starting execution button 214. The user can click the starting execution button 214. In response to the operation of the user clicking the starting execution button 214, the SDN controller calls the corresponding front-end general API to skip to the SDN controller interface in the intention execution phase and enter the intention execution phase, and then calls the API (i.e., the fourth interface) corresponding to the network activation instruction to activate the network and launch the application.

Method 2, after the user inputs the fifth natural language in the human-computer natural language interaction interface 199 and clicks on the confirmation button 1910, then the network activation scheme for application launch skips to the intention execution phase.

Specifically, the user can input the natural language (i.e., the fifth natural language) for indicating network activation in the human-computer natural language interaction interface 199, and click on the confirmation button 1910. In response to the operation of the user clicking on the confirmation button 1910, the SDN controller calls the API (i.e., the first interface) corresponding to the AI network large model and inputs the natural language input by the user into the AI network large model, such that the AI network large model output the corresponding network activation instruction. Then, by using the AI agent, the SDN controller calls the corresponding front-end general API to skip to the SDN controller interface in the intention execution phase and enter the intention execution phase, and calls the API (i.e., the fourth interface) corresponding to the network activation instruction to activate the network and realize application launch.

Method 3, the user clicks on the intention execution phase tab 195, and the network activation scheme for application launch skips to the intention execution phase.

Specifically, the user can click on the intention execution phase tab 195. In response to the operation of the user clicking on the intention execution phase tab 195, the SDN controller calls the front-end general API for skipping to the corresponding interface to skip to the SDN controller interface in the intention execution phase and enter the intention execution phase, and calls the API (i.e., the fourth interface) corresponding to the network activation instruction, to activate the network and realize application launch.

In an example of the present disclosure, the SDN controller may use the operation of the user clicking on the intention execution phase tab 195 as the network activation instruction. After skipping to the SDN controller interface in the intention execution phase, the SDN controller may directly call the API corresponding to the network activation instruction to activate the network. Alternatively, the network activation instruction can be input additionally, and the SDN controller may call the API corresponding to the network activation instruction to activate the network after obtaining the network activation instruction.

For example, after skipping to the SDN controller interface in the intention execution phase, the Method 2 is adopted to input the fifth natural language in the human-computer natural language interaction interface 199 to achieve the purpose of obtaining the network activation instruction.

For another example, the starting execution button may be set on the SDN controller interface in the intention execution phase, such as the starting execution button 221 in the display column 197 shown in Figure 22a. After skipping to the SDN controller interface in the intention execution phase, the user clicks on the starting execution button 221; in response to the operation of the user clicking on the starting execution button 221, the SDN controller generates the network activation instruction, and calls the API (i.e., the fourth interface) corresponding to the network activation instruction, to activate the network and realize application launch.

Figures 22a to 22b are fourth schematic diagrams of an SDN controller interface provided by an example of the present disclosure. Figures 22a to 22b each is a SDN controller interface in the intention execution phase, and the intention execution phase tab 195 is in bold.

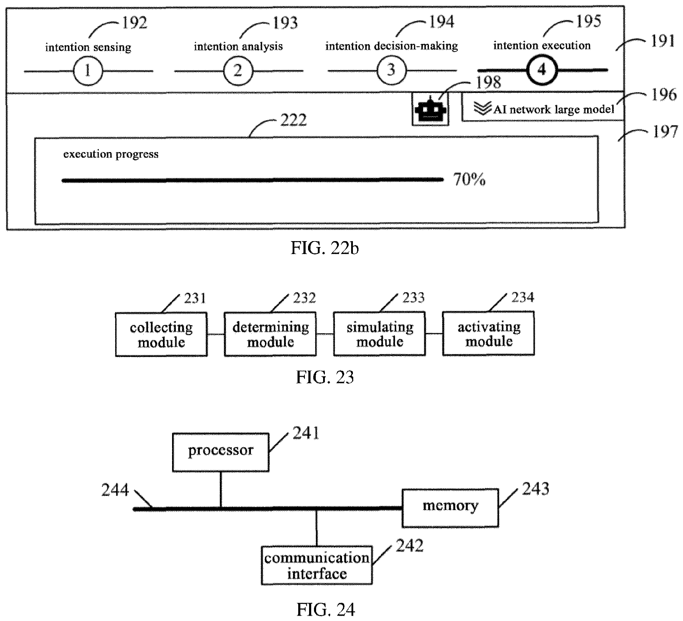

During the execution of the intention (i.e., activating the network), the SDN controller can display an execution progress 222 on the display column 197. As shown in Figure 22b, the current execution progress is 70%, which has not reached 100%, indicating that the network activation has not been completed. At this time, the SDN controller can display a prompt information "Please wait" in the human-computer natural language interaction interface 199. When the intention execution is completed (i.e., the execution progress reaches 100%), the SDN controller confirms that the network activation is completed, i.e., the application launch is completed.

In the technical solution provided by the example of the present disclosure, an AI network large model is introduced. Based on the human-computer natural language interaction capability of the AI network large model, the problem that the data center autonomous network lacks the ability to understand the user's service-level intention when collecting application launch intentions is solved.

By training the AI network large model with a large amount of DCN corpuses and fine-tuning the model with the labelled data set in the application launch scenarios, the AI network large model is deployed in the production environment to improve the ability to understand the application launch intention and solve the problem that the data center autonomous network cannot understand a new network intention and a change in network intentions in the application launch scenario.

By using both the AI network large model and the scheme knowledge base, the private domain knowledge for activating the network in the application launch scenario of the AI network large model is expanded, and the accuracy of the AI network large model in recommending and generating the scheme for the application launch scenarios of the autonomous network is improved.

Through the AI agent framework, the enrich APIs of the SDN controller are called based on the tool set, thereby realizing the capability of the graphical presentation of the network activation scheme for application launch.

By continuously enriching the network corpuses and the labelled data se of the application launch scenario of the data center autonomous network, the AI network large model is trained and fine-tuned. By continuously updating the deployment method of the AI network large model on the backend, the self-evolution and development of the capability of the data center autonomous network to recommend and generate the network activation scheme in the application launch scenario can be realized. By splitting and vectorizing new knowledge and then storing it in a vector data base, the scheme knowledge base is continuously supplemented and improved. The AI agent framework is used to enrich the tool set for interaction between application launch scenarios and the SDN controller, the capability of executing the intention of the application launch scenario is enhanced, and finally self-evolution and development of the capability to recommend and generate the network activation scheme for the application launch scenario are realized.

Corresponding to the above-mentioned network activation method for application launch, an example of the present disclosure provides a network activation apparatus for application launch, referring to Figure 23, which is a schematic structure diagram of a network activation apparatus for application launch provided by an example of the present disclosure, and the apparatus includes:
a collecting module 231, to collect a first natural language for indicating an application launch service intention based on a human-computer interaction mode;
a determining module 232, to input the first natural language into an AI network large model to obtain a target network activation scheme;
a simulating module 233, to perform simulation and evaluation on the target network activation scheme;
an activating module 234, to activate a network based on the target network activation scheme after a result of simulation and evaluation meets a preset condition.

In the technical solution provided by the examples of the present disclosure, the natural language is used to express a user intention, that is, the application launch service intention. The natural language is a language that is easy for the user to understand without a professional knowledge background. Therefore, the natural language is used to express the user intention, to realize network activation for application launch, which improves the ability to understand the user's service-level intention. In addition, in the technical solution provided by the examples of the present disclosure, the AI network large model is used to analyze and process the natural language (i.e., the first natural language) that expresses the user intention, so as to obtain the target network activation scheme that meets the application launch service intention. Since the AI network large model has a strong capability to process the natural language, there is no need for pre-configured network activation schemes and intentions. That is, even if a new intention and a change in intention appear, or a change in the scenario and networking requirement appears, the AI network large model can perform analysis to obtain the required target network activation scheme, thereby improving the scalability of intention collecting, and improving the adaptability to scenarios and networking.

In some examples, the collecting module 231 is specifically to:
present a human-computer interaction dialog box;
receive the first natural language for indicating the application launch intention, which is input by a user on the human-computer interaction dialog box.

In some examples, the collecting module 231 is further to:
display first prompt information on the human-computer interaction dialog box, wherein the first prompt information is to guide an input of the application launch service intention.

In some examples, the determination module 232 is specifically to:
match the first natural language with pieces of knowledge of multiple pre-stored network activation schemes to obtain multiple pieces of candidate knowledge;
input the first natural language and the multiple pieces of candidate knowledge into the AI network large model to obtain the target network activation scheme.

In some examples, the above apparatus further includes a presenting module, to:
based on the human-computer interaction mode, collect a second natural language for indicating a presenting mode of the network activation scheme;
input the second natural language into the AI network large model to obtain a target presenting mode;
call an interface corresponding to the target presenting mode by using an AI agent, to present the target network activation scheme.

In some examples, the above presenting module is specifically to:
present a human-computer interaction dialog box;
receive the second natural language for indicating the presenting mode of the network activation scheme, which is input by a user on the human-computer interaction dialog box.

In some examples, the above presenting module is further to:
display second prompt information on the human-computer interaction dialog box, wherein the second prompt information is to guide an input of the presenting mode of the network activation scheme.

In some examples, the simulating module 233 is specifically to:
adjust the presented target network activation scheme based on a user operation;
perform simulation and evaluation on the adjusted target network activation scheme.

In some examples, the AI network large model outputs multiple target network activation schemes; the above simulating module 233 is specifically to:
determine one target network activation scheme from the multiple target network activation schemes;
perform simulation and evaluation on the determined target network activation scheme.

In some examples, the simulating module 233 is specifically to:
based on the human-computer interaction mode, collect a third natural language for indicating the determined target network activation scheme;
input the third natural language into the AI network large model to obtain the determined target network activation scheme.

In some examples, the simulating module 233 is specifically to:
present a human-computer interaction dialog box;
receive the third natural language for indicating the determined target network activation scheme, which is input by a user on the human-computer interaction dialog box.

In some examples, the simulating module 233 is further to:
display third prompt information on the human-computer interaction dialog box, wherein the third prompt information is to guide an input of the determined target network activation scheme.

In some examples, the simulating module 233 is specifically to:
based on the human-computer interaction mode, collect a fourth natural language for indicating simulation and evaluation;
input the fourth natural language into the AI network large model to obtain a simulation and evaluation instruction;
call an interface corresponding to the simulation and evaluation instruction by using an AI agent, to perform simulation and evaluation on the target network activation scheme.

In some examples, the simulating module 233 is specifically to:
present a human-computer interaction dialog box;
input the fourth natural language for indicating simulation and evaluation, which is input by a user on the human-computer interaction dialog box.

In some examples, the simulating module 233 is further to:
display fourth prompt information on the human-computer interaction dialog box, wherein the fourth prompt information is to guide an input of execution information of simulation and evaluation.

In some examples, the activating module 234 is specifically to:
based on the human-computer interaction mode, collect a fifth natural language for indicating network activation;
input the fifth natural language into the AI network large model to obtain a network activation instruction;
call an interface corresponding to the network activation instruction by using an AI agent, to activate the network by using the target network activation scheme.

In some examples, the activating module 234 is specifically to:
present a human-computer interaction dialog box;
receive the fifth natural language for indicating network activation, which is input by a user on the human-computer interaction dialog box.

In some examples, the activating module 234 is further to:
display fifth prompt information on the human-computer interaction dialog box, wherein the fifth prompt information is to guide an input of execution information for network activation.

In some examples, the above apparatus further includes a displaying module, to:
determine a to-be-executed operation;
display prompt information associated with the to-be-executed operation on the human-computer interaction dialog box.

In some examples, the above apparatus further includes a fine-tuning module, to:
obtain a sample natural language and a sample network activation scheme corresponding to the sample natural language;
use the sample natural language and the sample network activation scheme, to fine-tune the AI network large model.

An example of the present disclosure further provides an electronic device, as shown in Figure 24, including a processor 241, a communication interface 242, a memory 243 and a communication bus 244, wherein the processor 241, the communication interface 242 and the memory 243 communicate with each other through the communication bus 244;
the memory 243, to store a computer program;
the processor 241, to carry out any of the network activation methods for application launch when executing the program stored in the memory 243.

The communication bus mentioned in the above electronic device can be a Peripheral Component Interconnect (PCI) bus or an Extended Industry Standard Architecture (EISA) bus, etc. The communication bus can be divided into an address bus, a data bus, a control bus, etc. For ease of representation, only one thick line is used in the figure, but it does not indicate that there is only one bus or one type of bus.

The communication interface 242 is used for communication between the above electronic device and other devices.

The memory 243 may include a random access memory (RAM) or a non-volatile memory (non-volatile memory), such as at least one disk memory. Optionally, the memory 243 may also be at least one storage device located far away from the processor 241.

The above-mentioned processor 241 can be a general-purpose processor, including a central processing unit (CPU), a network processor (NP), etc.; it can also be a digital signal processor (DSP), an application specific integrated circuit (ASIC), a field programmable gate array (FPGA) or other programmable logic devices, discrete gates or transistor logic devices, discrete hardware components.

In yet another example provided by the present disclosure, a computer-readable storage medium is provided, wherein the computer-readable storage medium has a computer program stored therein that, when executed by a processor, carries out any of the network activation methods for application launch.

In yet another example provided by the present disclosure, a computer program product containing instructions is further provided, which when run on a computer, cause the computer to carry out any of the network activation methods for application launch in the above examples.

In the above examples, it can be implemented in whole or in part by software, hardware, firmware or any combination thereof. When implemented in software, it can be implemented in whole or in part in the form of a computer program product. The computer program product includes one or more computer instructions. When the computer program instructions are loaded and executed on a computer, the processes or functions described in the examples of the present disclosure are generated in whole or in part. The computer may be a general purpose computer, a special purpose computer, a computer network, or other programmable device. The computer instructions may be stored in a computer readable storage medium or transmitted from one computer readable storage medium to another computer readable storage medium, for example, the computer instructions may be transmitted from a website, a computer, a server or a data center to another website, computer, server, or data center by wire (such as coaxial cable, fiber optic, digital subscriber line (DSL)) or wirelessly (such as infrared, wireless, microwave, etc.). The computer-readable storage medium may be any usable medium that can be accessed by a computer or a data storage device such as a server and a data center and the like that includes an integration of one or more available medium. The usable medium may be magnetic medium (such as a floppy disk, a hard disk, a magnetic tape), optical medium (such as DVD), or semiconductor medium (such as Solid State Disk (SSD)) and the like.

It should be noted that in this article, relational terms such as first and second are only to distinguish one entity or operation from another, and do not necessarily require or imply any actual relationship or order between these entities or operations. Moreover, the terms "including", "containing", or any other variation thereof are intended to encompass non-exclusive inclusion, such that a process, method, item, or device that includes a series of elements not only includes those elements, but also other elements that are not explicitly listed, or also include elements inherent in such a process, method, item, or device. Without further limitations, the elements limited by the statement "including one..." do not exclude the existence of other identical elements in the process, method, item, or device that includes the elements.

The various examples in this specification are described in a related manner. Each example focuses on the differences from other examples, and the same and similar parts between the various examples can be referred to each other. Especially, for the examples of the apparatus, electronic device, storage medium and program product, the description is relatively simple because it is basically similar to the examples of the method, and the relevant points can be referred to the partial description of the example of the method.

The above descriptions are only preferred examples of the present disclosure, and are not intended to limit the present disclosure. Any modifications, equivalent replacements, improvements and the like made within the spirit and principles of the present disclosure shall be included within the scope of protection of the present disclosure.

## Claims

1. A network activation method for application launch, comprising:
based on a human-computer interaction mode, collecting a first natural language for indicating an application launch service intention;
inputting the first natural language into an artificial intelligence AI network large model to obtain a target network activation scheme;
performing simulation and evaluation on the target network activation scheme;
after a result of the simulation and evaluation meets a preset condition, activating a network based on the target network activation scheme.

2. The method according to claim 1, wherein based on the human-computer interaction mode, collecting the first natural language for indicating the application launch service intention, comprises:
presenting a human-computer interaction dialog box;
receiving the first natural language for indicating the application launch intention, which is input by a user on the human-computer interaction dialog box.

3. The method according to claim 2, wherein the method further comprises:
displaying first prompt information on the human-computer interaction dialog box, wherein the first prompt information is to guide an input of the application launch service intention.

4. The method according to claim 1, wherein inputting the first natural language into the artificial intelligence AI network large model to obtain the target network activation scheme, comprises:
matching the first natural language with pieces of knowledge of multiple pre-stored network activation schemes to obtain multiple pieces of candidate knowledge;
inputting the first natural language and the multiple pieces of candidate knowledge into the AI network large model to obtain the target network activation scheme.

5. The method according to claim 1, wherein the method further comprises:
based on the human-computer interaction mode, collecting a second natural language for indicating a presenting mode of the network activation scheme;
inputting the second natural language into the AI network large model to obtain a target presenting mode;
calling an interface corresponding to the target presenting mode by using an AI agent, to present the target network activation scheme.

6. The method according to claim 5, wherein based on the human-computer interaction mode, collecting the second natural language for indicating the presenting mode of the network activation scheme, comprises:
presenting a human-computer interaction dialog box;
receiving the second natural language for indicating the presenting mode of the network activation scheme, which is input by a user on the human-computer interaction dialog box.

7. The method according to claim 6, wherein the method further comprises:
displaying second prompt information on the human-computer interaction dialog box, wherein the second prompt information is to guide an input of the presenting mode of the network activation scheme.

8. The method according to any one of claims 5 to 7, wherein performing simulation and evaluation on the target network activation scheme, comprises:
adjusting the presented target network activation scheme based on a user operation;
performing simulation and evaluation on the adjusted target network activation scheme.

9. The method according to claim 1, wherein the AI network large model outputs multiple target network activation schemes;
performing simulation and evaluation on the target network activation scheme, comprises:
determining one target network activation scheme from the multiple target network activation schemes;
performing simulation and evaluation on the determined target network activation scheme.

10. The method according to claim 9, wherein determining one target network activation scheme from the multiple target network activation schemes, comprises:
based on the human-computer interaction mode, collecting a third natural language for indicating the determined target network activation scheme;
inputting the third natural language into the AI network large model to obtain the determined target network activation scheme.

11. The method according to claim 10, wherein based on the human-computer interaction mode, collecting the third natural language for indicating the determined target network activation scheme, comprises:
presenting a human-computer interaction dialog box;
receiving the third natural language for indicating the determined target network activation scheme, which is input by a user on the human-computer interaction dialog box.

12. The method according to claim 11, wherein the method further comprises:
displaying third prompt information on the human-computer interaction dialog box, wherein the third prompt information is to guide an input of the determined target network activation scheme.

13. The method according to claim 1, wherein performing simulation and evaluation on the target network activation scheme, comprises:
based on the human-computer interaction mode, collecting a fourth natural language for indicating simulation and evaluation;
inputting the fourth natural language into the AI network large model to obtain a simulation and evaluation instruction;
calling an interface corresponding to the simulation and evaluation instruction by using an AI agent, to perform simulation and evaluation on the target network activation scheme.

14. The method according to claim 13, wherein based on the human-computer interaction mode, collecting the fourth natural language for indicating simulation and evaluation, comprises:
presenting a human-computer interaction dialog box;
inputting the fourth natural language for indicating simulation and evaluation, which is input by a user on the human-computer interaction dialog box.

15. The method according to claim 14, wherein the method further comprises:
displaying fourth prompt information on the human-computer interaction dialog box, wherein the fourth prompt information is to guide an input of execution information of simulation and evaluation.

16. The method according to claim 1, wherein activating the network based on the target network activation scheme, comprises:
based on the human-computer interaction mode, collecting a fifth natural language for indicating network activation;
inputting the fifth natural language into the AI network large model to obtain a network activation instruction;
calling an interface corresponding to the network activation instruction by using an AI agent, to activate the network by using the target network activation scheme.

17. The method according to claim 16, wherein based on the human-computer interaction mode, collecting the fifth natural language for indicating network activation, comprises:
presenting a human-computer interaction dialog box;
receiving the fifth natural language for indicating network activation, which is input by a user on the human-computer interaction dialog box.

18. The method according to claim 17, wherein the method further comprises:
displaying fifth prompt information on the human-computer interaction dialog box, wherein the fifth prompt information is to guide an input of execution information of network activation.

19. The method according to any one of claims 3, 7, 12, 15 and 18, wherein the method further comprises:
determining a to-be-executed operation;
displaying prompt information associated with the to-be-executed operation on the human-computer interaction dialog box.

20. The method according to claim 1, wherein the method further comprises:
obtaining a sample natural language and a sample network activation scheme corresponding to the sample natural language;
using the sample natural language and the sample network activation scheme to fine-tune the AI network large model.

21. A network activation apparatus for application launch, comprising:
a collecting module, to collect a first natural language for indicating an application launch service intention based on a human-computer interaction mode;
a determining module, to input the first natural language into an artificial intelligence AI network large model to obtain a target network activation scheme;
a simulating module, to perform simulation and evaluation on the target network activation scheme;
an activating module, to activate a network based on the target network activation scheme after a result of the simulation and evaluation meets a preset condition.

22. An electronic device, comprising a processor, a communication interface, a memory and a communication bus, wherein the processor, the communication interface and the memory communicate with each other through the communication bus;
the memory, to store a computer program;
the processor, to carry out the method according to any one of claims 1-20 when executing the program stored in the memory.

23. A computer-readable storage medium having a computer program stored therein, wherein the computer program, when executed by a processor, carries out the method according to any one of claims 1 to 20.
